# EUROPEAN PATENT SPECIFICATION

(11) **EP 1 704 910 B1**
(45) Date of publication and mention of the grant of the patent: **19.09.2018**
(21) Application number: 06004865.9
(22) Date of filing: 09.03.2006
(51) Int. Cl.: B01D 53/94, B01J 21/04, B01J 23/44, B01J 23/10

(54) **EXHAUST GAS PURIFICATION CATALYST**
ABGASREINIGUNGSKATALYSATOR
CATALYSEUR DE PURIFICATION DE GAZ D'ÉCHAPPEMENT

(30) Priority: 24.03.2005 JP 2005085515; 24.03.2005 JP 2005085516; 24.03.2005 JP 2005085517; 24.03.2005 JP 2005085518; 12.01.2006 JP 2006005263
(43) Date of publication of application: 27.09.2006
(73) Proprietor: Tokyo Roki Co., Ltd., Yokohama-shi Kanagawa 224-0041 (JP); Mazda Motor Corporation, Aki-gun, Hiroshima 730-8670 (JP)
(72) Inventor: Kawamoto, Tomohiko, Yokohama-shi Kanagawa 224-0041 (JP); Fujita, Katsuyuki, Yokohama-shi Kanagawa 224-0041 (JP); Tokuyama, Tadashi, Yokohama-shi Kanagawa 224-0041 (JP); Kawabata, Hisaya, Aki-gun Hiroshima 730-8670 (JP); Shigetsu, Masahiko, Aki-gun Hiroshima 730-8670 (JP); Akamine, Masaaki, Aki-gun Hiroshima 730-8670 (JP); Takami, Akihide, Aki-gun Hiroshima 730-8670 (JP)
(74) Representative: Thoma, Michael

(56) References cited:
- EP-A- 0 782 880
- EP-A- 1 297 887
- WO-A-2004/004898

## Description

### BACKGROUND OF THE INVENTION

### (a) Field of the Invention

This invention relates to exhaust gas purification catalysts and pertains to the technical field of exhaust gas purification for automobiles.

### (b) Description of the Related Art

Three-way catalysts are conventionally known which can concurrently convert hydrocarbon (HC), carbon monoxide (CO) and nitrogen oxides (NOx) contained in exhaust gas from automobiles into carbon dioxide (CO₂), water (H₂O) and nitrogen (N₂). There has recently been a demand for a three-way catalyst of such kind to attain high conversion efficiencies of all three pollutants from just after engine start. To satisfy this demand, a technique is employed which increases the catalyst temperature up to more than the catalytic reaction temperature in a short time after engine start, as by directly connecting the catalyst to the convergence of an exhaust manifold for the engine (close-coupled catalyst) or placing an underfloor catalyst at an upstream part of an exhaust passage as close to the engine as possible. If, however, the catalyst is placed close to or comparatively close to the engine, it will be exposed to extremely high-temperature exhaust gas during acceleration operation and other operations of the engine. This results in a problem that particles of catalytic precious metals, such as platinum (Pt), rhodium (Rh) and palladium (Pd), carried on alumina or an oxygen storage component in a catalytic coating move on the surface of the alumina or the oxygen storage component to coagulate and cause sintering, resulting in deteriorated conversion performance. In particular, if different kinds of catalytic precious metals sinter and alloy together, they will loose catalytic activity and thereby significantly deteriorate their catalytic conversion performance, which is a big problem.

To prevent different kinds of catalytic precious metals from sintering and alloying, a technique disclosed in Japanese Unexamined Patent Publication No. 2003-170047 can be applied. Specifically, as shown in Figure 28, a catalytic coating composed of an upper layer and a lower layer is formed on the wall of each of exhaust gas channels in a honeycomb support, alumina and cerium (Ce)-zirconium (Zr)-neodymium (Nd) mixed oxide are contained in the upper catalytic layer, and alumina, Ce-Zr-Nd mixed oxide and cerium dioxide (ceria) are contained in the lower layer. Ce-Zr-Nd mixed oxide and cerium dioxide are oxygen storage components having oxygen storage capacity and the function of extending the A/F window of the three-way catalyst. Further, platinum is carried on alumina in the upper layer, rhodium is carried on the oxygen storage component in the upper layer and palladium is carried on alumina in the lower layer. Thus, different kinds of catalytic precious metals are separately carried on different support materials including different kinds of aluminas and the oxygen storage component. This prevents different kinds of catalytic precious metals from sintering and alloying together, thereby avoiding significant deterioration in conversion performance.

Generally, in carrying catalytic precious metal on alumina, the larger specific surface area of alumina provides higher dispersity of catalytic precious metal. As a result, it is believed that precious metal particles are less likely to be coagulated and thereby less likely to sinter, which prevents deterioration in conversion performance. If support materials bond together, i.e., different kinds of aluminas or alumina and oxygen storage component bond to each other to sinter, a problem arises that catalytic precious metal particles are buried inward of the surface of the sintered support material to further deteriorate the catalyst. However, when the specific surface area of alumina is large, it can be considered that even if support materials sinter, the loss of catalytic precious metal due to burial in the sintered support material is small and, therefore, deterioration in conversion performance is small.

It is being perceived that for lean NOx trap catalysts, for example, higher degree of basicity of alumina surface provides a larger number of sites to adsorb and hold negatively charged derivative molecules in exhaust gas, e.g., NO₃⁻ ions, which improves NOx conversion performance. If this perception is applied to three-way catalysts, it is inferred that when adsorbed NO₃⁻ ions are decomposed, active oxygen is released from them and released active oxygen exhibits the action to convert HC by oxidation. If this is true, it is probably preferable to employ high basicity alumina as all kinds of aluminas which are contained in a catalyst to carry various kinds of catalytic precious metals. However, as results of inventors' research and development of catalysts excellent in thermal resistance, they have found that when different kinds of catalytic precious metals including platinum, rhodium and palladium are individually carried on alumina particles of the same kind having the same specific surface area and the same basicity, a deterioration in conversion performance has been observed even if the alumina particles have a large specific surface area and a high basicity.

In addition, in the technique disclosed in the above patent document, platinum and palladium are each carried on alumina but not on the oxygen storage component. Further, rhodium is carried on the oxygen storage component but not on alumina. Therefore, interaction is not sufficiently established between each catalytic precious metal and its support material such as alumina or oxygen storage component and it cannot necessarily be said that the surface state of each catalytic precious metal is optimized for exhaust gas purification. Furthermore, it cannot be said that the dispersity of each catalytic precious metal over the support material is high. Therefore, there is a problem that when the catalyst is exposed to high-temperature exhaust gas, each catalytic precious metal may sinter and not sufficiently exhibit its catalytic property, resulting in deteriorated exhaust gas purification performance of the catalyst. Furthermore, if sintering occurs between different kinds of aluminas or between different kinds of oxygen storage components, catalytic precious metals are buried inward of the surfaces of the support materials to further deteriorate the catalyst.

To solve the above problems, it can be considered to carry the same kind of catalytic precious metal on both alumina and the oxygen storage component. Oxygen storage and release of the oxygen storage component is involved in the catalytic reaction of catalytic precious metal. Any proposal of in which distribution ratio the same kind of catalytic precious metal should been carried on alumina and the oxygen storage component, however, has not up to now been made.

It is also known that if zirconium dioxide (ZrO₂) is compounded with cerium dioxide having oxygen storage capacity, the resultant mixed oxide has high thermal resistance and in turn improves the thermal resistance of the catalyst. If, however, the amount of ZrO₂ added is increased, the content of cerium dioxide in the mixed oxide is correspondingly decreased so that the mixed oxide deteriorates its oxygen storage capacity, resulting in deteriorated conversion performance of the catalyst.
Document WO 2004/004898 A suggests a two-layer structure of a catalytic coating, wherein the lower layer comprises palladium as catalytic precious material and the upper layer comprises rhodium as catalytic precious material.
Furthermore, EP-A-1297887 describes an exhaust gas purifying catalyst with a plurality of catalytic layers coated on a substrate, wherein an intermediate catalytic layer contains palladium and an outer catalytic layer containing an NOx adsorption material is laid over said intermediate catalytic layer. Document EP-A-0782880 also describes a catalyst with a monolithic carrier and a catalyst adsorbent layer coated thereon, said catalyst adsorbent layer including a catalyst being composed mainly of catalyst particles comprising a heat resistant inorganic oxide and at least one noble metal selected from Pt, Pd and Rh.

### SUMMARY OF THE INVENTION

The present invention intends to solve the foregoing problems in catalysts susceptible to high heat load from engine exhaust gas, for example, catalysts placed close to engines or underfloor catalysts placed relatively close to engines.

Therefore, an object of the present invention is to provide a catalyst having improved catalytic conversion performance and excellent thermal resistance in consideration of the specific surface area and surface condition of alumina carrying catalytic precious metal.

Another object of the present invention is to prevent different kinds of catalytic precious metals from sintering and alloying together.

Still another object of the present invention is to enhance the dispersity of each catalytic precious metal, thereby preventing catalytic precious metal particles of the same kind from sintering together.

Still another object of the present invention is to provide an optimal combination of each catalytic precious metal and suitable support materials among different kinds of aluminas and different kinds of oxygen storage components.

Still another object of the present invention is to propose, when catalytic precious metal is carried on both alumina and an oxygen storage component, the ratio between the amount of catalytic precious metal carried on alumina and that on the oxygen storage component which can exhibit high conversion performance by optimizing the catalytic reaction of the catalytic precious metal and the action of the oxygen storage component.

Still another object of the present invention is to improve the conversion performance by improving both the thermal resistance and the oxygen storage capacity of the catalyst.
According to the present invention, the aforementioned objectives are achieved by an exhaust gas purification catalyst as defined by claim 1.

According to this solution, as compared with the case where all kinds of catalytic precious metals are individually carried on alumina particles of the same kind having the same specific surface area, the catalytic conversion performance is improved, thereby providing a catalyst having an excellent thermal resistance. According to the inventors' founding, palladium is carried on particles of a particulate alumina having a large specific surface area and a high surface basicity, and rhodium is carried on particles of a particulate alumina which have a smaller specific surface area and an intermediate surface basicity as compared with the particulate alumina carrying palladium and the particulate alumina carrying platinum and whose surfaces are coated to prevent solid solution of rhodium in the alumina particles.

In particular, when palladium is carried on particles of the particulate alumina having a high surface basicity, it can be easily controlled into a good oxidation condition. Specifically, the oxidation condition of palladium reversibly changes so that Pd ↔PdO↔ PdO₂↔ ... and the ratio of coexistence of these oxidation conditions is a factor having a significant effect on oxidation reactions of hydrocarbon and carbon monoxide. When palladium is carried on particles of the particulate alumina having a high surface basicity, the ratio of coexistence of the oxidation conditions is made proper so that the efficiencies of palladium converting hydrocarbon and carbon monoxide by oxidation can be enhanced over a long period of time.

Furthermore, when the surfaces of the alumina particles carrying rhodium are coated with, for example, zirconium dioxide to prevent rhodium from solid solution in the alumina particles, rhodium can be stabilized over a long period of time, which is particularly advantageous in NOx conversion performance.

The particulate alumina compounded with at east cerium to have oxygen storage capacity has a more excellent thermal resistance than cerium dioxide and Ce-Zr-Nd mixed oxide. Therefore, palladium can be controlled to an excellent oxidation condition over a longer period of time by active oxygen supplied from the particulate alumina having oxygen storage capacity. Further, since the particulate alumina having oxygen storage capacity contains alumina, a large specific surface area can be maintained over a long period of time, which ensures an excellent catalytic activity.

A solution of the invention is characterized in that the catalytic coating is formed of an upper layer and a lower layer and the lower layer contains the palladium-carried particulate alumina having oxygen storage capacity.

If a particulate oxygen storage component having a high oxygen storage capacity is disposed in the upper layer, the A/F ratio of exhaust gas flowing from upstream to downstream side and from upper to lower layer of the catalyst is controlled to be suitable for concurrent catalytic conversion of HC, CO and NOx. As a result, the Pd support material (i.e., the particulate alumina) in the lower layer effectively acts on purification of the exhaust gas, thereby improving catalytic performance. Further, palladium in the lower layer is prevented from being sintered and alloyed with catalytic precious metal in the upper layer, such as rhodium. Since palladium is protected by the upper layer, it can be prevented from being poisoned by S (sulfur) and P (phosphorus).

A solution of the invention is characterized in that the plural kinds of particulate aluminas carrying the catalytic precious metals include the palladium-carried particulate alumina having oxygen storage capacity and two kinds of particulate aluminas having different specific surface areas, and
out of the two kinds of particulate aluminas having different specific surface areas, a particulate alumina having a smaller specific surface area is contained in the upper layer while a particulate alumina having a larger specific surface area is contained in the lower layer.

Palladium in the lower layer is better dispersed than catalytic precious metal in the upper layer, such as rhodium. As a result, palladium particles are less likely to coagulate and therefore less likely to sinter, which restrains deterioration in conversion performance of palladium. Further, even if alumina particles carrying palladium or alumina particles having oxygen storage capacity in the lower layer sinter, the loss of palladium particles is reduced. This restrains deterioration in catalytic conversion performance.

The claimed invention is directed to an exhaust gas purification catalyst in which a catalytic coating containing plural kinds of catalytic precious metals and plural kinds of particulate aluminas is coated on a honeycomb support, as defined in claim 1.

According to this solution, the catalyst can be enhanced in thermal resistance and conversion performance.

Other solutions described herein may not be according to the claimed invention.

In addition, since at least one of the plural kinds of catalytic precious metals is carried on both particles of the at least one kind of particulate alumina and particles of the at least one kind of particulate oxygen storage component, the catalytic precious metal is distributively carried on a larger number of alumina particles and a larger number of oxygen storage component particles. In other words, the catalytic precious metal is increased in dispersity (becomes more dispersive). As a result, precious metal particles are less likely to sinter, which prevents a significant reduction in the total surface area of the catalytic precious metal. Further, even if alumina particles or oxygen storage component particles sinter, the loss of catalytic precious metal particles due to burial in the sintered support material is reduced. This also reduces reduction in the total surface area of catalytic precious metal.

In the above manners, the above solution prevents different kinds of catalytic precious metals from sintering and alloying together and makes it difficult for particles of each catalytic precious metal to sinter by increasing the dispersity of each catalytic precious metal. Thus, the catalyst can be further enhanced in thermal resistance and can maintain its excellent catalytic conversion performance over a longer period of time.

A solution of the invention is characterized in that in the fifth solution, the catalytic coating is formed of an upper layer and a lower layer, one of the plural kinds of catalytic precious metals is palladium, and said palladium is carried on particles of the particulate alumina and particles of the particulate oxygen storage component both of which are contained in the lower layer.

The catalytic coating is formed of an upper layer and a lower layer and palladium, which is relatively likely to thermally deteriorate and likely to be poisoned with S and P, is carried on particles of the particulate alumina and particulate oxygen storage component in the lower layer. Therefore, palladium is protected by the upper layer and thereby relieved from thermal deterioration and poisoning. In addition, palladium in the lower layer can be further restrained from being sintered and alloyed with catalytic precious metals in the upper layer, such as platinum and rhodium.

Further, since particulate aluminas generally have large specific surface area, palladium carried on the particulate alumina is highly dispersed. Therefore, even if the catalyst is exposed to high-temperature exhaust gas, palladium particles are less likely to coagulate and less likely to sinter, thereby lowering the reduction in the total surface area of the palladium particles. In addition, even if particles of the palladium-carried alumina or particles of palladium-carried oxygen storage component in the lower layer sinter each other, the loss of palladium particles due to burial in the sintered support material can be reduced, thereby restraining deterioration in catalytic conversion performance.

Furthermore, since palladium is carried on particles of the particulate oxygen storage component for releasing oxygen under rich exhaust gas conditions, palladium is controlled into an excellent oxidation condition by active oxygen supplied from particles of the particulate oxygen storage component. Specifically, the oxidation condition of palladium reversibly changes so that Pd↔PdO↔PdO₂↔ ... and the ratio of coexistence of these oxidation conditions is a factor having a significant effect on oxidation reactions of hydrocarbon and carbon monoxide. Since the ratio of coexistence of the oxidation conditions is made proper, the efficiencies of palladium converting hydrocarbon and carbon monoxide by oxidation can be enhanced over a long period of time.

A solution of the invention is characterized in that the catalytic coating is formed of an upper layer and a lower layer, one of the plural kinds of catalytic precious metals is rhodium, and said rhodium is carried on particles of the particulate alumina and particles of the particulate oxygen storage component both of which are contained in the upper layer.

Since the catalytic coating is formed of an upper layer and a lower layer and rhodium, which mainly contributes to NOx reduction conversion, is carried on particles of the particulate alumina and particulate oxygen storage component in the upper layer, rhodium in the upper layer can be restrained from being sintered and alloyed with the catalytic precious metal in the lower layer, such as palladium.

Further, since particulate aluminas generally have large specific surface area, rhodium carried on the particulate alumina is highly dispersed. Therefore, rhodium particles are less likely to coagulate and less likely to sinter, thereby lowering the reduction in the total surface area of the rhodium particles. In addition, even if particles of the rhodium-carried alumina or particles of rhodium-carried oxygen storage component in the upper layer sinter each other, the loss of rhodium particles due to burial in the sintered support material can be reduced, thereby restraining deterioration in catalytic conversion performance.

Furthermore, according to the above solution, the steam reforming reaction of hydrocarbon is promoted so that a large amount of active hydrogen is produced, thereby enhancing the efficiency of NOx reduction conversion of hydrogen. That is, rhodium carried on the oxygen storage component acts to promote the reduction reaction of NO+H₂→N₂+H₂O using active hydrogen produced by the reactions of HC+H₂O→CO+H₂ (steam reforming reaction) and CO+H₂O→CO₂+H₂ (water gas shift reaction). Note that in each reaction formula, description of factors are not given.

An solution of the invention is characterized in that in the sixth solution, the particles of the particulate oxygen storage component carrying palladium are particles of alumina compounded with at least cerium.

Since the particulate oxygen storage component carrying palladium is made of alumina compounded with at least cerium, it has a more excellent thermal resistance than cerium dioxide and conventional Ce-Zr-Nd mixed oxides. Therefore, palladium can be controlled into an excellent oxidation condition over a longer period of time by active oxygen supplied from the particulate oxygen storage component. Further, since the particulate oxygen storage component contains alumina, it can maintain a large specific surface area over a long period of time, which ensures an excellent catalytic activity.

A solution of the invention is characterized in that in the eighth solution, the alumina compounded with at least cerium is further compounded with one or more kinds of rare earth elements other than cerium and zirconium.

Since the alumina compounded with cerium is further compounded with zirconium and one or more kinds of rare earth metals other than cerium, this particulate oxygen storage component is further improved in thermal resistance, thereby maintaining a large specific surface area over a longer period of time.

A solution of the invention is directed to an exhaust gas purification catalyst in which a catalytic coating containing plural kinds of catalytic precious metals other than platinum, at least one kind of particulate alumina and at least one kind of particulate oxygen storage component is coated on a honeycomb support, wherein
the catalytic coating is formed of an upper layer and a lower layer,
each of particles of the at least one kind of particulate alumina and the at least one kind of particulate oxygen storage component carries only one of the plural kinds of catalytic precious metals,
the plural kinds of catalytic precious metals include palladium and rhodium,
said palladium is carried on particles of the particulate alumina and particles of the particulate oxygen storage component both of which are disposed in the lower layer,
said rhodium is carried on particles of the particulate alumina and particles of the particulate oxygen storage component both of which are disposed in the upper layer, and
the mass ratio Pd/Rh between said palladium and said rhodium is in the range from 4/1 to 7/1 both inclusive.

When the A/F ratio of automobile exhaust gas is lean, rhodium carried on alumina particles is oxidized. That is, active oxygen atoms exist on the surfaces of rhodium particles. When the A/F ratio of the exhaust gas becomes rich, the CO concentration in the exhaust gas becomes high.

In this connection, rhodium carried on alumina particles exhibits high CO oxidation capacity at relatively high exhaust gas temperatures from 300°C, at which oxygen release from oxygen storage component particles becomes active, to 500°C. Therefore, when the CO concentration in the exhaust gas becomes high, CO in the exhaust gas is oxidized by the action of active oxygen binding to rhodium. In other words, the reaction of CO+O→CO₂ occurs on each rhodium particle so that the oxygen atom on the rhodium particle is removed.

Since rhodium, however, is by nature likely to bind to oxygen, it can be supposed that when oxygen is removed from a rhodium particle by the reaction with CO, the rhodium particle takes another oxygen atom from its ambient atmosphere. That is, when oxygen atoms are removed from rhodium particles, oxygen atoms are actively released from oxygen storage component particles in order to compensate for the loss of oxygen atoms on the rhodium particles. As a result, the catalyst exhibits high activity, i.e., enhances the performance of converting HC and CO in exhaust gas by oxidation.

Further, rhodium carried on oxygen storage component particles reaches near to metal form (a simple substance) by the action of the oxygen storage component particles. Therefore, the existence of rhodium in metal form smoothes oxygen storage/release of the oxygen storage component particles, thereby enhancing the activity of the catalyst. In addition, rhodium in metal form acts effectively on reduction of NOx in exhaust gas. This holds true for both the upper layer and the lower layer.

On the other hand, for platinum-carried alumina particles, almost all of the platinum particles are in metal form. Therefore, even under rich exhaust gas conditions, CO in exhaust gas is simply adsorbed to platinum. Specifically, since no oxygen atom binds to these platinum particles, the reaction of CO+O→CO₂ is less likely to occur. By contrast, platinum adsorbs CO in exhaust gas to restrict oxygen release of the oxygen storage component particles. Thus, even if the oxygen storage component particles release oxygen, the released oxygen is not used for oxidation of CO so much. Therefore, the oxygen concentration around the oxygen storage component particles becomes high so that oxygen becomes less likely to be released from the oxygen storage component particles.

Further, in this solution, since rhodium and palladium are separately disposed in the upper layer and the lower layer, rhodium and palladium are surely prevented from being sintered or alloyed with each other.

Furthermore, since the mass ratio Pd/Rh between rhodium and palladium is in the range from 4/1 to 7/1 both inclusive, this is advantageous in improvement of low-temperature activity of the catalyst while providing an excellent high-temperature activity thereof.

An solution of the invention is directed to an exhaust gas purification catalyst in which a catalytic coating containing at least one kind of catalytic precious metal, at least one kind of particulate alumina and at least one kind of particulate oxygen storage component is coated on a honeycomb support, wherein
the catalytic coating contains rhodium as the at least one kind of catalytic precious metal,
said rhodium is carried on one said kind of particulate alumina and one said kind of particulate oxygen storage component,
the rhodium-carried particulate alumina has a larger specific surface area than the rhodium-carried particulate oxygen storage component, and
the one kind of particulate oxygen storage component carries a larger amount of rhodium per unit specific surface area than the one kind of particulate alumina.

Since a larger amount of rhodium per unit specific surface area is carried on the particulate oxygen storage component than on the particulate alumina, the steam reforming reaction of hydrocarbon is promoted even under rich exhaust gas conditions under which oxygen is released from the particulate oxygen storage component. As a result, a large amount of active hydrogen is produced and the produced hydrogen enhances the efficiency of NOx reduction conversion.

Further, when the A/F ratio is stoichiometric, Rh carried on the oxygen storage component particles works well on NOx conversion. At engine acceleration at which the A/F ratio becomes richer, Rh carried on the alumina particles works well on NOx conversion. Specifically, in the stoichiometric A/F ratio, variations in A/F are absorbed by the oxygen storage/release capacity of the oxygen storage component particles so that Rh effectively converts NOx. On the other hand, at engine acceleration at which the A/F ratio becomes richer, although Rh carried on the oxygen storage component particles promotes the steam reforming reaction, the surfaces of Rh particles carried on the oxygen storage component particles fall into excess oxygen condition by oxygen released from the oxygen storage component particles so that the catalytic conversion performance is deteriorated. Since, however, the alumina particles have no oxygen storage/release capacity, the surfaces of Rh particles carried on the alumina particles never fall into excess oxygen condition, which provides effective NOx conversion. Since Rh is thus carried on both the oxygen storage component particles and the alumina particles, NOx conversion performance can be enhanced.

A solution of the invention is characterized in that the catalytic coating contains palladium and rhodium as said catalytic precious metals, the catalytic coating is formed of an upper layer and a lower layer, said palladium is disposed in the lower layer, and said rhodium is disposed in the upper layer.

Palladium is carried in the lower layer. Therefore, when a particulate oxygen storage component having a high oxygen storage capacity is disposed in the upper layer, the A/F ratio of exhaust gas flowing from upstream to downstream side and from upper to lower layer of the catalyst is controlled to be suitable for concurrent catalytic conversion of HC, CO and NOx. As a result, exhaust gas purification performance due to palladium in the lower layer is improved. Further, palladium in the lower layer is prevented from being sintered and alloyed with rhodium in the upper layer. Since palladium is protected by the upper layer, it can be prevented from being poisoned by S (sulfur) and P (phosphorus). Furthermore, since rhodium is carried on particles of the particulate oxygen storage component and particulate alumina in the upper layer, this enhances the reactivity of the oxygen storage component particles and the steam reforming reactivity, which can promote NOx reduction reaction.

A solution of the invention is directed to an exhaust gas purification catalyst in which a catalytic coating containing a particulate oxygen storage component is coated on a honeycomb support, said particulate oxygen storage component containing cerium, zirconium and one or more rare earth elements other than cerium, wherein
the particulate oxygen storage component comprise different kinds of particulate oxygen storage components having different mass ratios, each of the mass ratios being expressed by ZrO₂/(CeO₂+ZrO₂+one or more rare earth element oxides),
the catalytic coating is formed of an upper layer and a lower layer,
the lower layer contains said particulate oxygen storage component of the kind having a mass ratio of 70 mass% or less, and
the upper layer contains said particulate oxygen storage component of the kind having a mass ratio of more than 70 mass%.

The particulate oxygen storage component having a mass ratio of 70 mass% or less is contained not in the upper layer but in the lower layer which does not face the exhaust gas channel and is not so much thermally severe as the upper layer, and the particulate oxygen storage component having a larger mass ratio than the particulate oxygen storage component in the lower layer is contained in the upper layer exposed to high-temperature exhaust gas. Therefore, the catalytic conversion performance of the catalyst is improved while the thermal resistance of the upper layer and the oxygen storage capacity of the lower layer are both improved, which enables the catalyst to maintain high catalytic conversion performance over a long period of time.

A solution of the invention is characterized in that, the lower layer contains cerium dioxide and at least two said kinds of particulate oxygen storage components having different mass ratios.

Oxygen can be stored and released over a wide temperature range. This provides extended A/F window to supply active oxygen to the upper layer as well as the lower layer and cause the active oxygen to involve in the catalytic reaction of catalytic precious metal, thereby improving the catalytic conversion activity.

One kind of catalytic precious metal is carried on the particulate oxygen storage component contained in the upper layer, and another kind of catalytic precious metal is carried on the particulate oxygen storage component contained in the lower layer.

Two different kinds of catalytic precious metals are carried on the particulate oxygen storage components contained in the upper and lower catalytic layers, respectively. Therefore, the catalytic precious metals are highly dispersed so that sintering and alloying can be less likely to occur between these different kinds of catalytic precious metals. This improves the thermal resistance of the catalyst and enables the catalyst to maintain high catalytic conversion performance.

At least one of the different kinds of particulate oxygen storage components is compounded with alumina.

The specific surface area of the at least one particulate oxygen storage component can be increased to enhance the dispersity of catalytic precious metal carried thereon, thereby providing a particulate oxygen storage component having excellent thermal resistance.

Said particulate oxygen storage component compounded with alumina is contained in the lower layer together with particulate alumina having a different specific surface area from said particulate oxygen storage component, and palladium is carried on said particulate oxygen storage component and said particulate alumina which have different specific surface areas.

Since palladium is distributively carried on the particulate alumina and the particulate oxygen storage component, this increases the number of active sites for palladium and provides high activity particularly for conversion of hydrocarbon and carbon monoxide. Further, palladium can be controlled into an excellent oxidation condition by active oxygen supplied from the particulate oxygen storage component, thereby enhancing the efficiencies of palladium converting hydrocarbon and carbon monoxide by oxidation over a long period of time.

### BRIEF DESCRIPTION OF THE DRAWINGS

Figure **1** shows a schematic structure of an automobile spark ignition engine at which a three-way catalyst is mounted.
Figure **2** is perspective and partly enlarged views showing the structure of the three-way catalyst.
Figure **3** is a schematic diagram showing the structure of a catalytic coating of Example 1.
Figure **4** is a schematic diagram showing the structure of a catalytic coating of Example 2.
Figure **5** is diagrams showing the crystal structure of a Ce-Zr-Nd mixed oxide.
Figure **6** is an enlarged view showing the structure of a Ce-Zr-La-Y-alumina compound.
Figure **7** is a table showing the specific surface areas and surface basicities of various kinds of support materials before and after aged.
Figure **8** shows FTIR charts for measurement of the surface basicities.
Figure **9** is a list showing the structures of catalytic coatings of Examples 1 to 4.
Figure **10** is a table showing details of components of the catalytic coating of Example 2.
Figure **11** is a table showing the amounts of Pd carried per unit mass on the first alumina and the Ce-Zr-La-Y-alumina compound and the amounts of Rh per unit specific surface area on the third alumina and the Ce-Zr-Nd mixed oxide in Example 2.
Figure **12** is a schematic diagram showing the structure of the catalytic coating of Example 3 which is no embodiment of the invention.
Figure **13** is a list showing the structures of catalytic coatings of Comparative Examples 1 to 9.
Figure **14** is a schematic diagram showing the structure of the catalytic coating of Comparative Example 3.
Figure **15** is a table showing evaluation results for catalytic conversion performances of Examples 1 to 4 and Comparative Examples 1 to 9.
Figure **16** is a table showing the relation between temperature and oxygen release amount for each oxygen storage component in the upper and lower layers of Example 2.
Figure **17** is a cross-sectional view of a test device.
Figure **18** shows time charts of NOx conversion efficiencies of Examples 1 to 3.
Figure **19** is a schematic diagram showing the structure of the catalytic coating of each of examples 5 to 9 which are no embodiments of the invention.
Figure **20** is a table showing evaluation results for catalytic conversion performances of Examples 5 to 9.
Figure **21** is a graph showing the evaluation results for catalytic conversion performances of Examples 5 to 9.
Figure **22** is a graph showing effects of additives on the oxygen release capacity of an oxygen storage component.
Figure **23** schematically shows lean conditions and rich conditions for a catalyst in which Rh/CZN10 coexists with Rh/Zr/Al₂O₃.
Figure **24** schematically shows lean conditions and rich conditions for a catalyst in which Rh/CZN10 coexists with Pt/Al₂O₃.
Figure **25** is a graph showing results of examination of Rh 3d electron binding energy of Rh/CZN10 and Rh/Zr/Al₂O₃ each after aged.
Figure **26** is a graph showing results of X-ray diffraction of Pt/Al₂O₃ after aged.
Figure **27** is a graph showing the CO oxidation capacities of Rh/Zr/Al₂O₃ and Pt/Al₂O₃.
Figure **28** is a schematic diagram showing the structure of a catalytic coating in a technique disclosed in a patent document.

### DETAILED DESCRIPTION OF THE INVENTION

Hereinafter, further details of the present invention will be described with reference to its preferred embodiments.

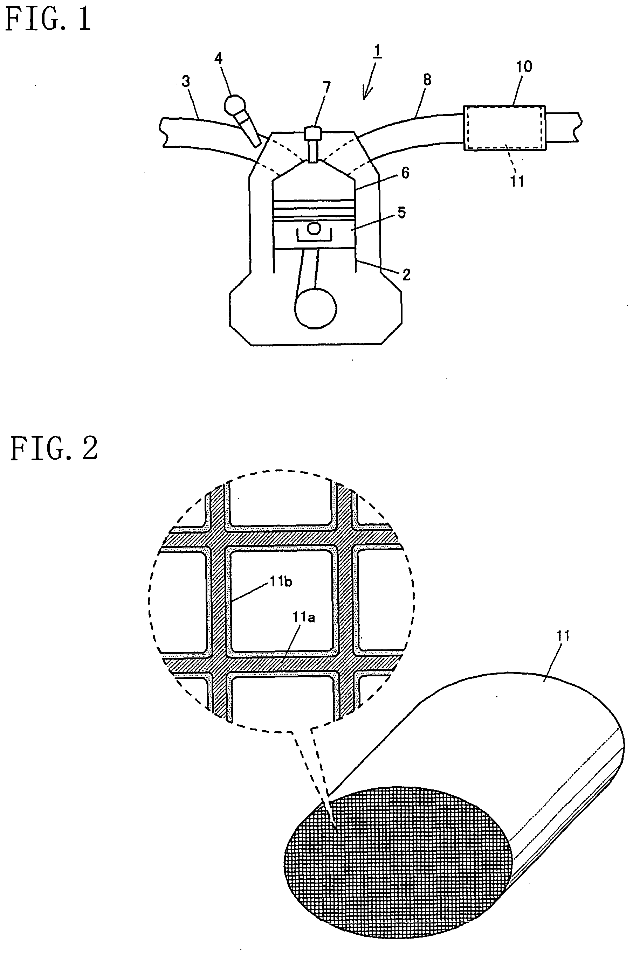

Figure **1** shows a schematic structure of an automobile spark ignition engine **1** at which a three-way catalyst **11** is mounted. Specifically, the engine **1** has a plurality of air cylinders **2** (only one shown in the figure) and is configured so that an air-fuel mixture of air supplied through an intake passage **3** and fuel supplied by a fuel injection valve **4** is explosively combusted in a combustion chamber **6** by spark ignition of an ignition plug 7 and the resultant exhaust gas is released to the air through an exhaust passage **8.** The exhaust passage **8** is provided with a catalytic converter **10** and the three-way catalyst **11** is contained in the catalytic converter **10.** The catalytic converter **10** is disposed in an upstream part of the exhaust passage **8** as much as possible, as by directly coupling it to the convergence of an exhaust manifold, in order to attain high conversion efficiency from just after start-up of the engine **1.** As a result, the three-way catalyst **11** will be exposed to extremely high-temperature exhaust gas, which requires some measure for thermal resistance.

### [Structure of Three-way catalyst]

As shown in Figure **2****,** the three-way catalyst **11** has a structure in which a catalytic coating **11b** is formed on the wall of each of exhaust gas channels in a honeycomb support **11a** made of cordierite. The catalytic coating **11b** may be a single layer or a multilayer structure in which lower and upper catalytic layers are stacked.

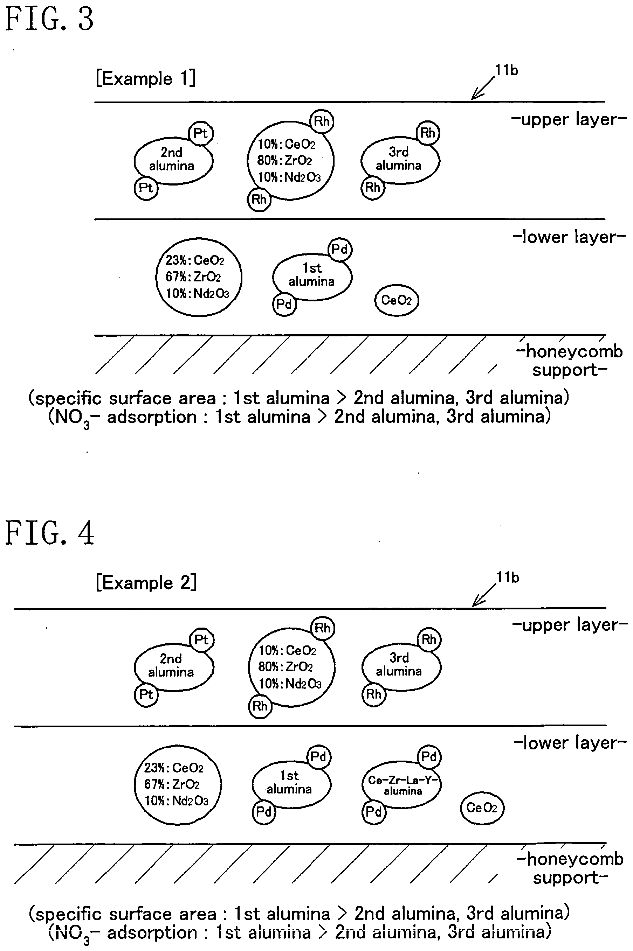

As shown in Figure **3****,** an example of the catalytic coating **11b** contains a first alumina carrying palladium (Pd), a second alumina carrying platinum (Pt), a third alumina carrying rhodium (Rh), a Ce-Zr-Nd mixed oxide (23%:CeO₂, 67%:ZrO₂, 10%:Nd₂O₃), a Ce-Zr-Nd mixed oxide (10%:CeO₂, 80%:ZrO₂, 10%:Nd₂O₃) carrying Rh, cerium dioxide (CeO₂) and a binder (zirconium dioxide (ZrO₂)).

The catalytic coating **11b** is composed of two layers; a lower layer containing the first alumina carrying Pd, the Ce-Zr-Nd mixed oxide and cerium dioxide; and an upper layer containing the second alumina carrying Pt, the third alumina carrying Rh and the Ce-Zr-Nd mixed oxide carrying Rh.

In another example of the catalytic coating **11b** shown in Figure **4****,** the lower layer further contains a Ce-Zr-La-Y-alumina compound (indicated as Ce-Zr-La-Y-alumina in the figures) carrying Pd.

The first alumina, second alumina, third alumina, two kinds of Ce-Zr-Nd mixed oxides, Ce-Zr-La-Y-alumina compound and cerium dioxide are formed in particles.

The use of zirconium dioxide as a binder is for the purpose of improving the thermal resistance of the catalytic coating **11b**.

### [Preparation of Three-way catalyst]

The preparation of the three-way catalyst **11** is generally carried out in the following manner. The description thereof will be given taking as an example the case where the catalytic coating **11b** is composed of an upper layer and a lower layer and the lower layer contains a Pd-carried Ce-Zr-La-Y-alumina compound as shown in Figure **4****.**

### <Formation of lower catalytic layer>

A Pd-carried first alumina is obtained by dropping a water solution of palladium nitrate on powder of active alumina to which 4 mass% of lanthanum (La) is added (first alumina) and drying and calcining the active alumina powder at 500°C. The Pd-carried first alumina, cerium dioxide, a Ce-Zr-Nd mixed oxide, a Pd-carried Ce-Zr-La-Y-alumina compound (whose preparation method will be described later) and a binder are mixed and water is also added and mixed by stirring with a disperser to obtain a slurry. A honeycomb support **11a** made of cordierite is immersed in the slurry and then picked up and surplus slurry is removed by air blow. This process is repeated until the support **11a** is coated with a predetermined amount of slurry. Thereafter, the honeycomb support **11a** is heated from normal temperature up to 500°C at a constant rate of temperature increase in 1.5 hours. The honeycomb support **11a** is then dried and calcined by keeping it at 500°C for two hours, resulting in the formation of a lower catalytic layer.

### <Formation of upper catalytic layer>

A Pt-carried second alumina is obtained by dropping a water solution of diamminedinitro platinum nitrate on powder of active alumina to which 4 mass% of La is added (second alumina) and drying and calcining the active alumina powder at 500°C. Further, a Rh-carried third alumina is obtained by dropping a water solution of rhodium nitrate on powder of active alumina to which 4 mass% of La is added (third alumina), each active alumina particle coated with 10 mass% of zirconium dioxide, and drying and calcining the active alumina powder at 500°C. Furthermore, a Rh-carried Ce-Zr-Nd mixed oxide is obtained by dropping a water solution of rhodium nitrate on a Ce-Zr-Nd mixed oxide and drying and calcining the Ce-Zr-Nd mixed oxide at 500°C. The Pt-carried second alumina, the Rh-carried third alumina, the Rh-carried Ce-Zr-Nd mixed oxide and a binder are mixed and water is also added and mixed by stirring with a disperser to obtain a slurry. The cordierite honeycomb support **11a** having the lower catalytic layer formed as above is immersed in the slurry and then picked up and surplus slurry is removed by air blow. This process is repeated until the support **11a** is coated with a predetermined amount of slurry. Thereafter, the honeycomb support **11a** is heated from normal temperature up to 500°C at a constant rate of temperature increase in 1.5 hours. The honeycomb support **11a** is then dried and calcined by keeping it at 500°C for two hours, resulting in the formation of an upper catalytic layer.

### <Preparation of Pd-carried compound>

A Pd-carried Ce-Zr-La-Y-alumina compound, which will be contained in the lower catalytic layer, can be prepared by either hydrothermal synthesis using an autoclave or coprecipitation using acid-alkali neutralization. The preparation will be explained here with reference to the coprecipitation method. First, nitrate salts of Ce, Zr, La, Y (yttrium) and Al (aluminum) are mixed and water is further added and stirred at room temperature for about an hour. Next, the nitrate salt mixed solution and an alkaline solution (preferably, 28% ammonia water) are neutralized by mixing them at any temperature between room temperature and 80°C. When neutralization is carried out using a disperser, its number of revolutions is set at between about 4000 rpm and about 6000 rpm. Further, the rate of addition of the nitrate salt mixed solution is preferably about 53 mL/min and the rate of addition of the alkaline solution is preferably about 3 mL/min.

The white-turbid solution obtained by the above neutralization is left stand for one day and night to produce a precipitated cake. The precipitated cake is centrifuged by a centrifugal separator and then rinsed with water. The water-rinsed cake is dried at about 150°C, dried and calcined by keeping it at about 600°C for about five hours and then keeping it at about 500°C for two hours, then pulverized. Thereafter, the obtained powder is loaded with a solution of palladium nitrate and then evaporated to dryness. The resultant dried product is pulverized and then calcined by superheating to obtain a Pd-carried Ce-Zr-La-Y-alumina compound.

The preferable composition in mass ratio is, when components are accounted for in the form of their oxides, CeO₂ : ZrO₂ : La₂O₃ : Y₂O₃ : Al₂O₃ = 11.7 : 7.7 : 1.0 : 0.4 : 79.2, for example. In this case, the mass ratio expressed by ZrO₂/(CeO₂+ ZrO₂+ La₂O₃+ Y₂O₃) is 37 mass%.

### <Oxygen storage component structure and alumina solid state properties>

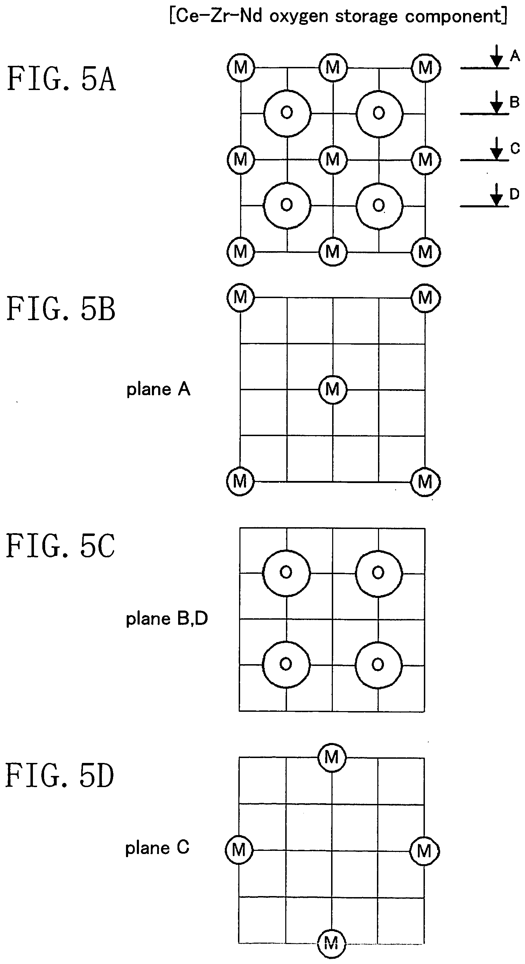

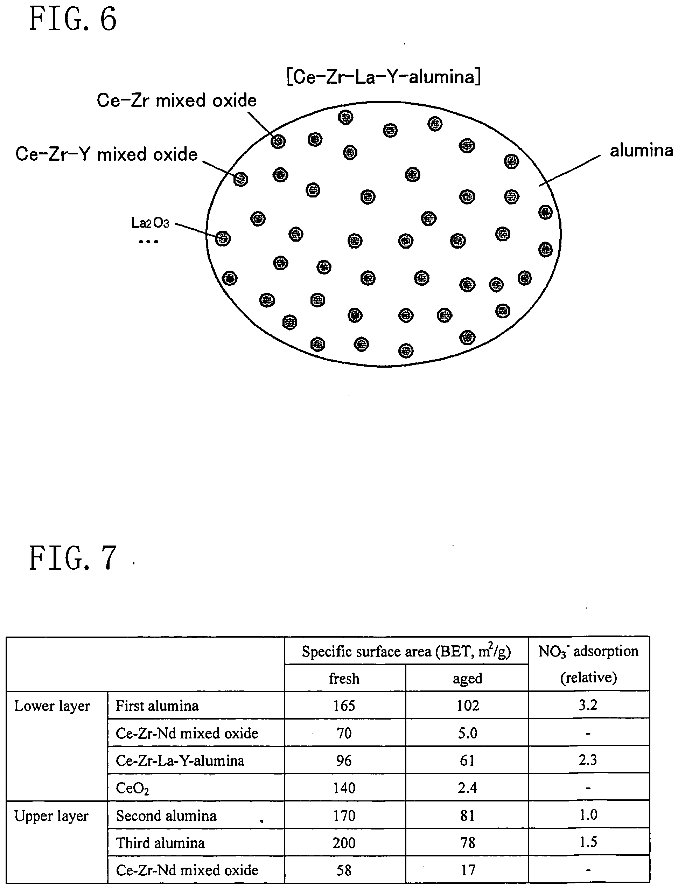

Each of cerium oxide, the two types of Ce-Zr-Nd mixed oxides and the Ce-Zr-LaY-alumina compound functions as an oxygen storage component that stores oxygen under lean exhaust gas conditions and releases oxygen under rich exhaust gas conditions. The Ce-Zr-Nd mixed oxides have a fluorite crystal structure as shown in Figure 5 (in which M indicates a metal atom and O indicates an oxygen atom). The Ce-Zr-La-Y-alumina compound has a structure in which, for example, Ce-Zr mixed oxide particles, Ce-Zr-Y mixed oxide particles and La₂O₃ particles are dispersed in the surface and inside of alumina as shown in Figure **6**.

4 mass% of La is added to each of the first to third aluminas in order to thermally stabilize them. The third alumina is obtained by coating the surface of the second alumina with 10 mass% of zirconium dioxide, which prevents solid solution of Rh in alumina in a high-temperature atmosphere. The first to third aluminas and the Ce-Zr-La-Y-alumina compound have different micropore shapes owing to different preparation conditions and therefore have different specific surface areas and different surface basicities.

Specifically, Figure **7** shows fresh and aged specific surface areas of various kinds of above-mentioned support materials and adsorption amounts of NO₃⁻ ion thereof when fresh. The first to third aluminas and the Ce-Zr-La-Y-alumina compound have different specific surface areas (BET values) and different adsorption amounts of NO₃⁻ ion (surface basicities). The aging conditions are that these support materials are kept at 1100°C in the normal atmosphere for 24 hours. Owing to differences in micropore shape, the Pd-carried first alumina has the greatest aged specific surface area and the Pt-carried second alumina, the Rh-carried third alumina and the Pd-carried Ce-Zr-La-Y-alumina compound have decreasing aged specific surface areas in this order.

On the other hand, the surface condition of each alumina is indicated by a basicity when it has not yet been aged, i.e., when it is fresh. The Pd-carried first alumina has the highest surface basicity (i.e., has the greatest number of sites for adsorbing negatively charged molecules) and the Pd-carried Ce-Zr-La-Y-alumina compound, the Rh-carried third alumina and the Pt-carried second alumina have decreasing surface basicities in this order.

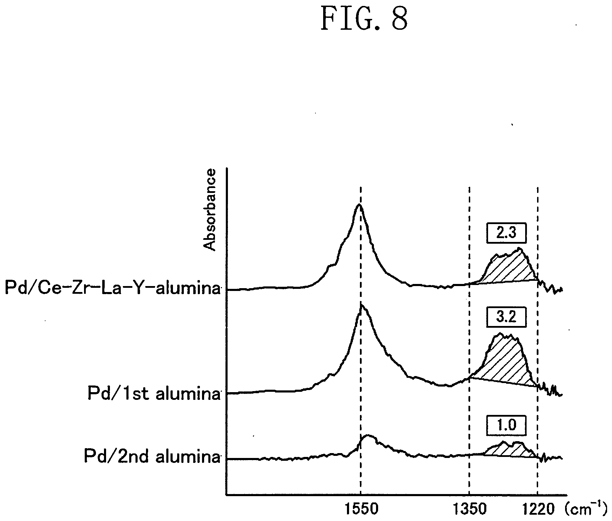

The surface basicity was measured by Fourier Transform Infrared Spectroscopy (FTIR). Specifically, the above kinds of aluminas when fresh were in-situ compared in the peak area of 1245cm⁻¹ to 1289cm⁻¹ with each other in a gaseous atmosphere of 500ppm NO and 10% O₂. The measurement results are shown in Figure **8** (where the results for the third alumina are not given). The peak of 1245cm⁻¹ to 1289cm⁻¹ indicates the absorption band of O-N-O symmetrical stretching vibration of NO₃⁻ ion. As shown in the figure, for each chart, the peak area indicated by the shaded portion, which is surrounded by connecting the intersection at 1220cm⁻¹ and the intersection at 1350cm⁻¹ at both of which the peak of 1245cm⁻¹ to 1289cm⁻¹ starts to rise, was calculated with a reference value of 1.0 assigned to the peak area for the second alumina. On the other hand, the peak having a value of 1550cm⁻¹ as its center indicates the absorption band of O-N-O antisymmetrical stretching vibration of NO₃⁻ ion.

### [Examples]

Three-way catalysts having the following compositions were produced according to the above-mentioned preparation method. The carried amount of each catalytic precious metal and the carried amount of each support material are indicated by amount per 1L of honeycomb support.

### <Example 1>

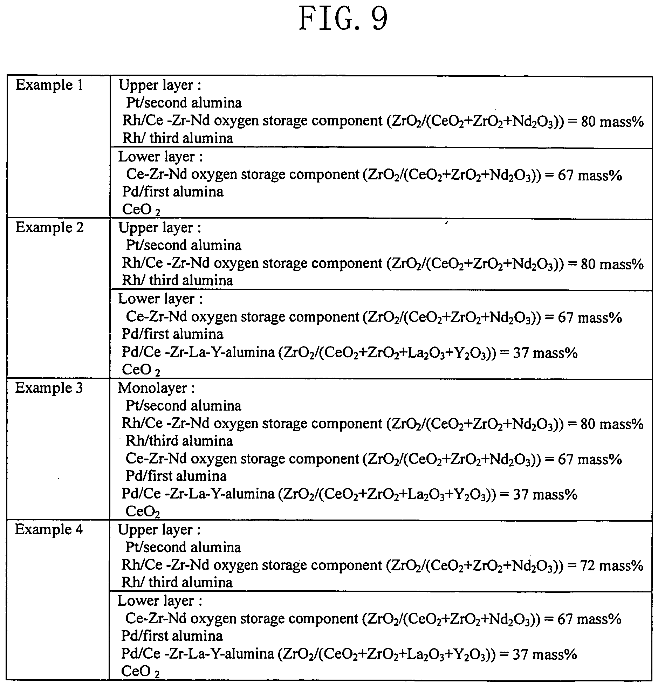

A three-way catalyst has two catalytic layers, upper and lower, as shown in Figure **3** (see Figure **9**).

### - Lower catalytic layer -

Ce-Zr-Nd mixed oxide : carried amount of 5.7 g/L
Pd/first alumina : carried amount of 50.0 g/L (Pd : carried amount of 0.7 g/L)
cerium dioxide : carried amount of 5.7 g/L
zirconia binder : carried amount of 8.5 g/L

### - Upper catalytic layer -

Pt/second alumina : carried amount of 25.5 g/L (Pt: carried amount of 0.08 g/L)
Rh/Ce-Zr-Nd mixed oxide : carried amount of 56.0 g/L (Rh : carried amount of 0.1 g/L)
Rh/third alumina : carried amount of 17.0 g/L (Rh : carried amount of 0.04 g/L)
zirconia binder : carried amount of 11.0 g/L
The mass ratio expressed by ZrO₂/(CeO₂+ZrO₂+Nd₂O₃) in the Ce-Zr-Nd mixed oxide is 80 mass% for the upper layer and 67 mass% for the lower layer.

### <Example 2>

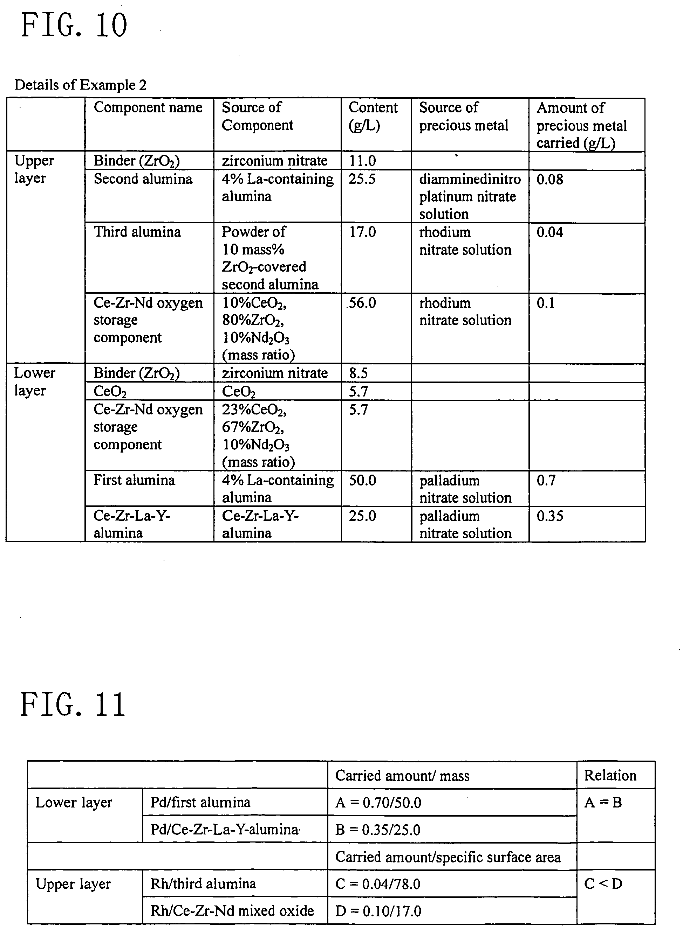

In the three-way catalyst as in Example 1, the lower catalytic layer further contains a Pd-carried Ce-Zr-La-Y-alumina compound at a carried amount of 25.0 g/L (of which the carried amount of Pd is 0.35 g/L) and the other components are the same as those in Example 1 (see Figures **9** and **10**).

As shown in Figure **11****,** in Example 2, the amounts of Pd carried per unit mass on the first alumina and the Ce-Zr-La-Y-alumina compound in the lower layer are A=0.70/50.0 and B=0.35/25.0, respectively, and therefore the relation A=B holds.

Further, the amounts of Rh carried per unit specific surface area (SSA) on the third alumina and the Ce-Zr-Nd mixed oxide in the upper layer are C=0.04/78 and D=0.10/17, respectively, and therefore the relation C<D holds.

### <Example 3>

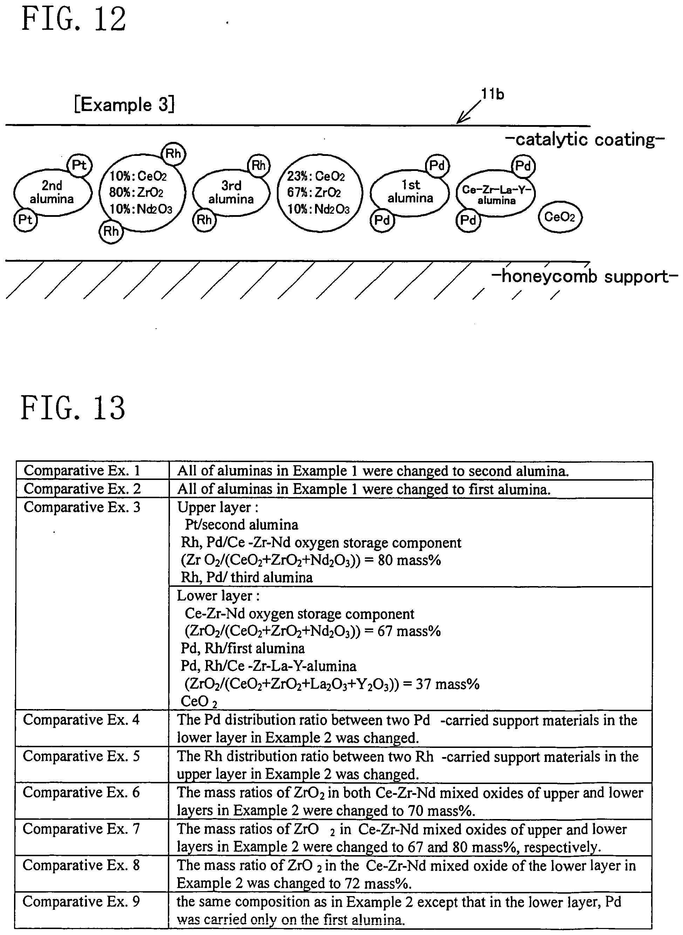

As shown in Figure **12****,** a three-way catalyst of this example is the same as that of Example 2 except that the catalytic coating is formed of a single layer instead of upper and lower layers (see Figure **9**).

### <Example 4>

A three-way catalyst of this example is the same as that of Example 2 except that the mass ratio of Ce-Zr-Nd mixed oxide in the upper layer is 72 mass% (see Figure **9**).

### <Comparative Example 1>

In the same three-way catalyst as in Example 1, each of the Pd-carried first alumina in the lower layer and the Rh-carried third alumina in the upper layer is changed to the same alumina as the second alumina and the other components are the same as those of Example 1 (see Figure **13**).

This Comparative Example 1 is an example for the purpose of evaluating how the specific surface area or the surface basicity of alumina has an influence on the activity and thermal resistance of the catalyst in comparison with Example 1.

### <Comparative Example 2>

In the three-way catalyst as in Example 1, each of the Pt-carried second alumina in the upper layer and the Rh-carried third alumina in the upper layer is changed to the same alumina as the first alumina and the other components are the same as those of Example 1 (see Figure **13**).

This Comparative Example 2 is an example for the purpose of evaluating how the specific surface area or the surface basicity of alumina has an influence on the activity and thermal resistance of the catalyst in comparison with Example 1.

### <Comparative Example 3>

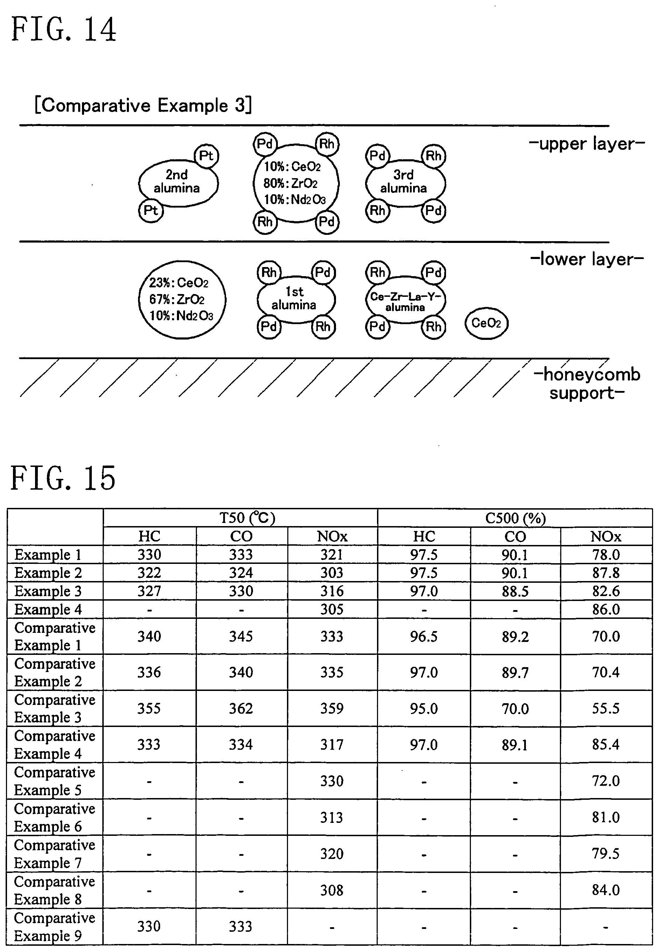

As shown in Figure **14****,** a three-way catalyst of this example is the same as that of Example 2 except that a half (0.525 g/L) of the amount of Pd carried in the lower layer is carried on the two kinds of Rh-carried support materials in the upper layer and that a half (0.07 g/L) of the amount of Rh carried in the upper layer is carried on the two kinds of Pd-carried support materials in the lower layer (see Figure **13**).

This Comparative Example 3 is an example for the purpose of evaluating how different the activity and thermal resistance of the catalyst is between the case of carrying a single kind of catalytic precious metal on a single kind of support material and the case of carrying plural kinds of catalytic precious metals on a single kind of support material in comparison with Example 2.

### <Comparative Example 4>

In the three-way catalyst as in Example 2, the ratio of the amount of Pd carried per unit mass in the first alumina in the lower layer to that in the Ce-Zr-La-Y-alumina compound in the lower layer is changed to 1 to 2 and the other components are the same as those of Example 2 (see Figure **13**).

This Comparative Example 4 is an example for the purpose of evaluating how the amount of Pd carried per unit mass on each support material has an influence on the activity and thermal resistance of the catalyst in comparison with Example 2.

### <Comparative Example 5>

In the three-way catalyst as in Example 2, the amount of Rh carried per unit specific surface area on the third alumina in the upper layer is equal to that on the Ce-Zr-Nd mixed oxide in the upper layer and the other components are the same as those of Example 2 (see Figure **13**).

This Comparative Example 5 is an example for the purpose of evaluating how the amount of Rh carried per unit specific surface area on each support material has an influence on the activity and thermal resistance of the catalyst in comparison with Example 2.

### <Comparative Example 6>

In the three-way catalyst as in Example 2, the mass ratio expressed by ZrO₂/(CeO₂+ZrO₂+Nd₂O₃) in the Ce-Zr-Nd mixed oxide is 70 mass% for both the upper and lower layers and the other components are the same as those of Example 2 (see Figure 13).

This Comparative Example 6 is an example for the purpose of evaluating how the above mass ratio in each of the Ce-Zr-Nd mixed oxides has an influence on the activity and thermal resistance of the catalyst in comparison with Example 2.

### <Comparative Example 7>

In the three-way catalyst as in Example 2, the mass ratio expressed by ZrO₂/(CeO₂+ZrO₂+Nd₂O₃) in the Ce-Zr-Nd mixed oxide is 67 mass% for the upper layer and 80 mass% for the lower layer and the other components are the same as those of Example 2 (see Figure **13**).

### <Comparative Example 8>

In the three-way catalyst as in Example 2, the mass ratio expressed by ZrO₂/(CeO₂+ZrO₂+Nd₂O₃) in the Ce-Zr-Nd mixed oxide in the lower layer is 72 mass% and the other components are the same as those of Example 2 (see Figure **13**).

### <Comparative Example 9>

In the three-way catalyst as in Example 2, Pd in the lower layer is carried only on the first alumina and the other components are the same as those of Example 2 (see Figure **13**).

This Comparative Example 9 is an example for the purpose of evaluating how different the activity and thermal resistance of the catalyst is between the case of carrying Pd on a single kind of support material and the case of distributively carrying Pd on plural kinds of support materials in comparison with Example 2.

### <Evaluation tests>

The catalyst of each of Examples 1 to 4 and Comparative examples 1 to 9 was aged by keeping it at 1100°C in an atmosphere of 2% of O₂ and 10% of H₂O for 24 hours and then measured in terms of T50 (°C) and C500 (%), which are indices for conversion performance of HC, CO and NOx, by a rig test.

The rig test was implemented by cutting out each aged catalyst in a cylindrical shape of 2.54cm diameter and 5cm length and attaching the cylindrical cut piece to a fixed-bed flow reactor. The simulated exhaust gas (mainstream gas + gas for changing the A/F ratio) used had an A/F ratio of 14.7±0.9 and the flow rate of the simulated exhaust gas into the catalyst was set at 25 L/min. Specifically, a mainstream gas was allowed to flow constantly at an A/F ratio of 14.7 and a predetermined amount of gas for changing the A/F ratio was added in pulses at a rate of 1Hz, so that the A/F ratio was forcedly oscillated within the range of ±0.9. O₂ was used as the gas for changing the A/F ratio when the A/F ratio was oscillated to a leaner value (15.6), while a mixture of H₂ and CO was used as the gas for changing the A/F ratio when the A/F ratio was oscillated to a richer value (13.8). The composition of the mainstream gas having an A/F ratio of 14.7 is as follows.

### - Mainstream gas -

CO₂ : 13.9%, O₂ : 0.6%, CO : 0.6%, H₂ : 0.2%, C₃H₆ : 0.056%, NO : 0.1%, H₂O : 10% and N₂ : the rest

T50 (°C) is the gas temperature at the entrance of each catalyst when the concentration of each exhaust gas component (HC, CO and NOx) detected downstream of the catalyst reaches half of that of the corresponding exhaust gas component flowing into the catalyst (when the conversion efficiency reaches 50%) after the temperature of the simulated exhaust gas is gradually increased (i.e., the light-off temperature), and indicates the low-temperature catalytic conversion performance of the catalyst. C500 (%) is the catalytic conversion efficiency of each exhaust gas component (HC, CO and NOx) when the simulated exhaust gas temperature at the catalyst entrance is 500°C and indicates the high-temperature catalytic conversion performance of the catalyst. The results from tests for T50 (°C) and the results from tests for C500 (%) are shown in Figure **15****.**

### <Influences of the specific surface area and the surface basicity of alumina and effects of Ce-Zr-La-Y-alumina compound>

The specific surface areas and surface basicities of various kinds of support materials in Examples 1 and 2 and Comparative Examples 1 and 2 are described in Figure **7****.** For Example 1, Pd is carried on the first alumina which has the largest specific surface area and the highest basicity, Pt is carried on the second alumina which has the second largest specific surface area and the lowest basicity, and Rh is carried on the third alumina which has the second smallest specific surface area and the third highest basicity. For Example 2, Pd is also carried on the Ce-Zr-La-Y-alumina compound which has the smallest specific surface area and the second highest basicity.

For Comparative Example 1, all kinds of catalytic precious metals are individually carried on particles of the second alumina which has the second largest specific surface area and the lowest basicity. For Comparative Example 2, all kinds of catalytic precious metals are individually carried on particles of the first alumina which has the largest specific surface area and the highest basicity.

The evaluation results in Figure **15** shows that in terms of all of HC, CO and NOx, Examples 1 and 2 have better T50 and C500 than Comparative Examples 1 and 2. More specifically, the evaluation results are better in the order of Example 2, Example 1, Comparative Example 2 and Comparative Example 1 (Example 2 > Example 1 > Comparative Example 2 > Comparative Example 1). Since Comparative Example 1 was configured so that its aluminas carrying catalytic precious metals had the lowest basicity, it could be expected that it was inferior in catalytic conversion performance than Examples 1 and 2. It could not be expected, however, that although Comparative Example 2 was configured so that its aluminas carrying catalytic precious metals had the largest specific surface area and the highest basicity, it was inferior in catalytic conversion performance than Examples 1 and 2. In other words, it was found that it is advantageous in improving catalytic conversion performance and thermal resistance to carry plural kinds of catalytic precious metals on different kinds of aluminas having different specific surface areas and different surface conditions, respectively, like Examples 1 and 2.

In the above case, since the evaluation results indicates that Comparative Example 2 > Comparative Example 1, it can be considered that as the surface basicity of Pd-carried alumina is higher, Pd can be more easily controlled into a better oxidation condition and therefore the efficiency of Pd converting HC and CO by oxidation can be enhanced over a longer period of time.

In addition, it can be considered that as the surface basicity of Pt-carried alumina is lower, Pt can be better prevented from being oxidized and therefore can maintain its catalytic activity for a longer period of time.

For Examples 1 and 2, since the specific surface area of the Pd-carried first alumina in the lower layer is larger than those of the Pt-carried second alumina and the Rh-carried third alumina in the upper layer (see Figure **7**), Pd in the lower layer can be dispersed with higher degree than Pt and Rh in the upper layer. As a result, even if the catalyst is exposed to high-temperature exhaust gas, Pd particles become less likely to coagulate and become less likely to sinter, thereby restraining deterioration in the catalytic conversion performance of Pd. In addition, even if particles of the Pd-carried first alumina or particles of the Pd-carried alumina having oxygen storage capacity (Ce-Zr-La-Y-alumina compound) in the lower layer sinter each other, the loss of Pd particles can be reduced, thereby restraining deterioration in the conversion performance of the catalyst.

In Comparative Examples 1 and 2, the NOx conversion efficiency is particularly reduced to a great degree as compared with Examples 1 and 2 though HC and CO conversion efficiencies are also reduced. One of the reasons is probably that since, in Comparative Examples 1 and 2, the surfaces of the Rh-carried alumina particles (first and second aluminas) were not coated with zirconium dioxide unlike the third alumina, Rh was exposed to high temperature to come into solid solution in alumina and become deactivated.

Next, a description will be made of the effects of employment of a Ce-Zr-La-Y-alumina compound as an oxygen storage component in comparison between Examples 1 and 2. The comparison shows that Example 2 provided a better result than Example 1. The reason is believed to be as follows.

In Example 2, Pd is carried on the oxygen storage component in which at least cerium and alumina are compounded to release oxygen under rich exhaust gas conditions (Ce-Zr-La-Y-alumina compound). Therefore, Pd is controlled into an excellent oxidation condition by active oxygen supplied from the oxygen storage component. Specifically, the oxidation condition of Pd reversibly changes so that Pd ↔ PdO ↔ PdO₂ ↔ ... and the ratio of coexistence of such different oxidation conditions is made proper. This enhances the efficiencies of Pd converting HC and CO by oxidation over a long period of time.

Since the Pd-carried Ce-Zr-La-Y-alumina compound (oxygen storage component) is more excellent in thermal resistance than cerium dioxide and Ce-Zr-Nd mixed oxide, Pd can be controlled into an excellent oxidation condition over a longer period of time by active oxygen supplied from the oxygen storage component. Further, since the oxygen storage component contains alumina, it can maintain a high specific surface area over a long period of time, thereby ensuring excellent catalytic activity of Pd.

Further, since the Ce-Zr-La-Y-alumina compound (oxygen storage component) is produced by compounding Ce, Zr, La (rare earth element excluding Ce) and Y, the oxygen storage component can further improve its thermal resistance and can maintain its large specific surface area over a longer period of time.

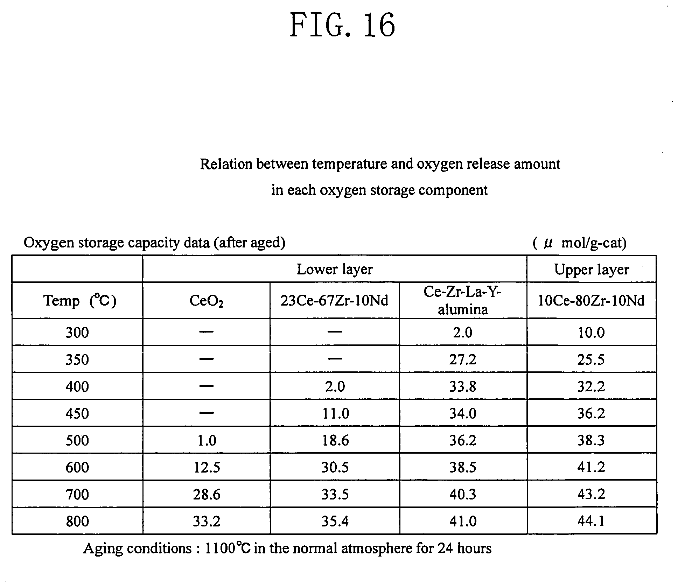

Figure **16** shows the relation between the temperature and the oxygen release amount of each of the oxygen storage components in the upper and lower layers after the oxygen storage components are aged. As seen from this figure, since Example 2 has a structure in which two kinds of oxygen storage components, Ce-Zr-Nd mixed oxide and Ce-Zr-La-Y-alumina compound, are contained, in addition to CeO₂, in the lower layer, it can release oxygen in a wide temperature range. This provides extended A/F window to supply active oxygen to the upper layer as well as the lower layer and cause the active oxygen to involve in the reaction of catalytic precious metals, thereby improving the catalytic conversion activity.

Figure 7 showing the specific surface areas before and after aged shows that out of oxygen storage components contained in the lower layer, the Ce-Zr-La-Y-alumina compound has a large specific surface area even after aged. The reason for a large specific surface area of Ce-Zr-La-Y-alumina compound is that it contains alumina. Therefore, this oxygen storage component can enhance the dispersity of Pd carried on the alumina as a catalytic precious metal, which has an advantage in improving the thermal resistance of the catalyst.

### <Influences of different kinds of catalytic precious metals carried on different support materials and differences between monolayer catalytic coating and double-layer catalytic coating structure>

The influences of different kinds of catalytic precious metals carried on different support materials will be examined with reference to the relation between Examples 2 and 3 and Comparative Example 3. In terms of all of HC, CO and NOx, Examples 2 and 3 were more excellent in T50 (°C) and C500 (%) than Comparative Example 3. The reason can be considered as follows. In Examples 2 and 3, since only one of the plural kinds of catalytic precious metals, Pt, Rh and Pd, is carried on each of aluminas and oxygen storage components, this prevents various kinds of catalytic precious metals from sintering and alloying together, thereby significantly restraining deterioration in catalytic conversion performance. On the other hand, in Comparative Example 3, since Rh and Pd of the plural kinds of catalytic precious metals, Pt, Rh and Pd, are carried together on each of the third alumina and the oxygen storage component in the upper layer and on each of the first alumina and the oxygen storage component in the lower layer, it can be considered that different kinds of catalytic precious metals, i.e., Rh and Pd, sinter and alloy together by aging, which significantly deteriorates the catalytic conversion performance. Particularly, Comparative example 3 exhibited a remarkable deterioration in NOx conversion efficiency. This is probably because the catalytic activity of Rh mainly contributing to NOx reduction conversion has itself been lost owing to alloying of Rh and Pd.

In addition, in Examples 2 and 3, Rh and Pd of the plural kinds of catalytic precious metals, Pt, Rh and Pd, are each carried on both one alumina and one oxygen storage component. Therefore, the catalytic precious metals Rh and Pd are distributively carried on more kinds of aluminas and more kinds of oxygen storage components than Comparative Example 3. In other words, the catalytic precious metals Rh and Pd are increased in dispersity (become more dispersive). As a result, particles of catalytic precious metals Rh and Pd are less likely to coagulate and therefore less likely to sinter, which reduces the degree of reduction of the total surface areas of catalytic precious metals Rh and Pd. Further, even if alumina particles or oxygen storage component particles sinter, the loss of particles of precious metals Rh and Pd is reduced. This also reduces the degree of reduction of the total surface areas of catalytic precious metals Rh and Pd.

In the above manners, Examples 2 and 3 prevent different kinds of catalytic precious metals Pt, Rh and Pd from sintering and alloying together and restrain particles of each of catalytic precious metals Pt, Rh and Pd from sintering by increasing the dispersity of each precious metal. Thus, the catalyst can be further enhanced in thermal resistance and can maintain its catalytic conversion performance over a longer period of time.

Further, in Examples 2 and 3, since alumina has a larger specific surface area than, for example, oxygen storage components, catalytic precious metals Pd, Pt and Rh individually carried on the first to third aluminas are put into higher dispersion than in Comparative Example 3. Therefore, particles of catalytic precious metal Pd, Pt and Rh are less likely to coagulate and therefore less likely to sinter, which reduces the degree of reduction of the total surface area of each of catalytic precious metals Pd, Pt and Rh. In addition, even if sintering occurs between particles of each alumina or particles of each oxygen storage component on which one of catalytic precious metals Pd, Pt and Rh is carried, the degree of loss of particles of precious metals Pd, Pt and Rh is reduced. This reduces deterioration in the catalytic conversion performance of each of catalytic precious metals Pd, Pt and Rh.

Next, differences between monolayer catalytic coating and double-layer catalytic coating structure will be examined. Example 2 having a catalytic coating of double-layer structure was more excellent in T50 and C500 than Example 3 having a monolayer catalytic coating. The reason is believed to be as follows. In Example 2, since the catalytic coating has a double-layer structure of upper and lower layers and a Rh-carried oxygen storage component of high oxygen storage capacity is disposed in the upper layer, variations in A/F ratio are absorbed during flow of exhaust gas from upstream to downstream side and from upper to lower layer of the catalyst. As a result, the Pd support materials (i.e., alumina and oxygen storage component) in the lower layer increase their catalytic conversion performance, thereby improving the catalyst performance. In addition, the following reason is also conceivable. In Example 2, the catalytic coating has a double-layer structure of upper and lower layers, Pd is carried in the lower layer and Pt and Rh are carried in the upper layer separately from Pd. This further prevents Pd in the lower layer from being sintered and alloyed with catalytic precious metals in the upper layer, particularly Rh. Further, since Pd is protected by the upper layer, it can be prevented from being poisoned by S and P.

### <Effects of the ratio of amount of Pd carried and effects of the ratio of amount of Rh carried>

Effects of the ratio of amount of Pd carried in the lower layer will be described in comparison between Example 2 and Comparative Example 4. The amount A of Pd carried per unit mass on the first alumina is substantially equal to the amount B of Pd carried per unit mass on the Ce-Zr-La-Y-alumina compound in Example 2 as shown in Figure **11****,** while A : B = 1 : 2 in Comparative Example 4. Referring to Figure **15****,** in terms of all of HC, CO and NOx, Example 2 is better in T50 and C500 than Comparative Example 4.

From the above results, it can be said that since the amounts A and B of Pd carried are substantially equal in Example 2, that is, Pd is evenly carried on the first alumina and the Ce-Zr-La-Y-alumina compound, both having relatively high specific surface area and thermal resistance, the number of active sites for Pd is increased to provide high conversion activities of HC and CO.

Next, in terms of NOx, Example 2 in which a larger amount of Rh is carried per unit specific surface area on the Ce-Zr-Nd mixed oxide for releasing oxygen under rich conditions than on the third alumina is better in T50 and C500 than Comparative Example 5. The reason is believed to be as follows.

First, under rich conditions, since active oxygen is supplied from the Ce-Zr-Nd mixed oxide, Rh carried on the Ce-Zr-Nd mixed oxide is less likely to be directly involved in reduction reaction of NOx. Therefore, it can be considered that in this case, Rh acts more intensively to promote the steam reforming reaction of HC so that the degree of production of active hydrogen is increased, thereby enhancing the efficiency of NOx reduction conversion of hydrogen. That is, Rh carried on the Ce-Zr-Nd mixed oxide acts to promote the reduction reaction of NO+H₂→N₂+H₂O using active hydrogen produced by the reactions of HC+H₂O→CO+H₂ and CO+H₂O→CO₂+H₂.

Further, in the stoichiometric A/F ratio, Rh carried on the oxygen storage component (the Ce-Zr-Nd mixed oxide) works well on NOx conversion. At engine acceleration at which the A/F ratio becomes richer, Rh carried on alumina (the third alumina) works well on NOx conversion. Specifically, in the stoichiometric A/F ratio, variations in A/F are absorbed by the oxygen storage/release capacity of the oxygen storage component (the Ce-Zr-Nd mixed oxide) so that Rh effectively converts NOx. On the other hand, at engine acceleration at which the A/F ratio becomes richer, the surfaces of Rh particles carried on the oxygen storage component (the Ce-Zr-Nd mixed oxide) fall into excess oxygen condition by released oxygen so that the catalytic conversion performance is deteriorated. Since, however, alumina (the third alumina) has no oxygen storage/release capacity, the surfaces of Rh particles carried on alumina (the third alumina) never fall into excess oxygen condition, which provides effective NOx conversion. Since Rh is thus carried on both the oxygen storage component (the Ce-Zr-Nd mixed oxide) and alumina (the third alumina), NOx conversion performance can be enhanced.

Next, NOx conversion in rich and stoichiometric A/F ratios will be considered with reference to experimental examples.

### (Catalyst under test)

Experimental Example 1 : A catalyst was prepared in which only Rh/third alumina (ZrO₂-coated alumina) was carried on a honeycomb support (third alumina = lOOg/L, Rh = 0.5g/L).

Experimental Example 2 : A catalyst was prepared in which only Rh/Ce-Zr-Nd mixed oxide was carried on a honeycomb support (Ce-Zr-Nd mixed oxide = 100g/L, Rh = 0.5g/L). Experimental Example 3 : A catalyst was prepared in which only Rh/second alumina was carried on a honeycomb support (second alumina = 100g/L, Rh = 0.5g/L).

### (Test evaluation method)

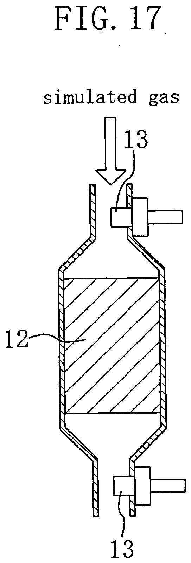

Each of the catalysts in Experimental Examples 1 to 3 was aged at 1100°C in the normal atmosphere for 24 hours and then measured in terms of NOx conversion efficiency under conditions that simulated gas was allowed to flow through each catalyst using a test device shown in Figure **17****.** The test device shown in Figure **17** simulates a state in which a three-way catalyst **12** is disposed in an exhaust passage and allows simulated gas to flow through itself. Linear oxygen sensors **13, 13** are disposed at the entrance and exit, respectively, of the catalyst **12.** In test, each of the catalysts in Experimental Examples 1 to 3 was attached as the catalyst **12** to the test device, simulated exhaust gas was allowed to flow through the test device by assuming a cyclic vehicle travel of stoichiometric A/F ratio (14.7) → lean A/F ratio (17.0) → rich A/F ratio (14.3) → stoichiometric A/F ratio → lean A/F ratio → rich A/F ratio → ..., and NOx conversion efficiency was measured in every stoichiometric and rich A/F ratios of the simulated gas.

### (Test evaluation results)

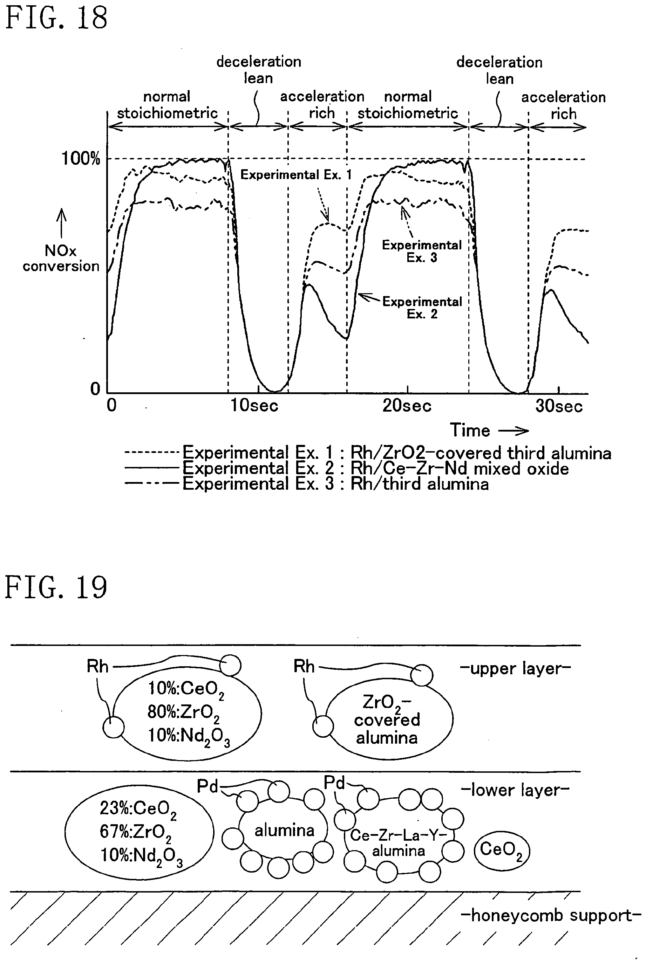

The results are shown in Figure **18****.** As shown in the figure, the NOx conversion efficiency in the stoichiometric A/F ratio decreased in the order Experimental Example 2 > Experimental Example 1 > Experimental Example 3, and the NOx conversion efficiency in the rich A/F ratio decreased in the order Experimental Example 1 > Experimental Example 3 > Experimental Example 2.

The reason of the results in the stoichiometric A/F ratio is believed to be as follows. In Experimental Example 2, variations in air-fuel ratio (A/F) are absorbed by a high oxygen storage/release capacity of the Ce-Zr-Nd mixed oxide, so that Rh effectively exhibits its NOx conversion performance. On the other hand, in Experimental Examples 1 and 3, since ZrO₂-coated third alumina or the third alumina has no oxygen storage/release capacity, NOx conversion performance is reduced as compared with Experimental Example 2.

The reason of the results in the rich A/F ratio is believed to be as follows. In Experimental Example 2, oxygen is released through the surfaces of Rh particles by the oxygen release capacity of the Ce-Zr-Nd mixed oxide, so that the surfaces of Rh particles fall into excess oxygen condition to make the adsorption and conversion of NOx difficult. On the other hand, in Experimental Examples 1 and 3, since ZrO₂-coated third alumina or the third alumina has no oxygen storage/release capacity, this avoids production of oxygen as in Experimental Example 2 and in turn ill effects of such oxygen on the NOx conversion performance.

Therefore, in the catalyst of Example 2 including elements of both the Experimental Examples 1 and 2, a high NOx conversion performance is provided by the Rh/Ce-Zr-Nd mixed oxide in the stoichiometric A/F ratio and the deterioration in NOx conversion performance due to Rh/Ce-Zr-Nd mixed oxide is avoided by Rh/ZrO₂-coated third alumina. As a result of combination of these effects, a high NOx conversion performance can be provided under a wide range of operating conditions.

A comparison between Experimental Examples 1 and 3 shows that Experimental Example 1 has a higher NOx conversion efficiency in both the stoichiometric and rich A/F ratios. Therefore, it is preferable that Rh-carried third alumina is coated with ZrO₂.

Next, the amount of Rh carried will be examined. The third alumina has an extremely large specific surface area after aged as compared with the Ce-Zr-Nd mixed oxide. Therefore, in order that the third alumina and the Ce-Zr-Nd mixed oxide have the same amount of Rh carried per unit specific surface area, the amount of Rh carried on the third alumina will be increased or the amount of Rh carried on the Ce-Zr-Nd mixed oxide will be decreased.

In the former case, that is, if the amount of Rh carried on the third alumina is increased, the required amount of Rh is increased, thereby providing cost up. In addition, even if the third alumina is coated with ZrO₂, some of Rh particles are brought into solid solution in the third alumina, thereby deteriorating catalytic conversion activity. On the other hand, in the latter case, that is, if the amount of Rh carried on the Ce-Zr-Nd mixed oxide is decreased, this makes it difficult to extend the A/F window under rich conditions, thereby not providing an expected improvement in catalytic conversion performance.

Therefore, if the amount D of Rh carried per unit specific surface area on the Ce-Zr-Nd mixed oxide is larger than the amount C of Rh carried per unit specific surface area on the third alumina, for example, as shown in Figure **11****,** this solves the problem of cost up of Rh and the problem of solid solution of Rh in the third alumina. Also, it becomes possible to extend the A/F window under rich conditions to promote the steam reforming reaction, providing an expected NOx reduction.

In particular, since Rh is carried on the Ce-Zr-Nd mixed oxide and the third alumina in the upper layer, this enhances the reactivity of the oxygen storage component (Ce-Zr-Nd mixed oxide) and the steam reforming reactivity, which can promote the reduction reaction of nitrogen oxides (NOx).

Further, since Pt is carried on the second alumina on which neither Pd nor Rh are carried, Pt is carried on the support material in a manner separated from Pd and Rh. This provides high dispersion of each catalytic precious metal and makes it difficult to cause sintering and alloying between these different kinds of catalytic precious metals.

### <Influences of ZrO₂ mass ratio in Ce-Zr-Nd mixed oxide>

Next, influences of the mass ratio in the Ce-Zr-Nd mixed oxide expressed by ZrO₂/(CeO₂+ZrO₂+Nd₂O₃) will be examined in comparison of Examples 2 and 4 with Comparative Examples 6 to 8. Figure **15** shows that Examples 2 and 4 have better T50 and C500 values than Comparative Examples 6 to 8.

First, in Comparative Example 6, both the mass ratios in the upper and lower layers in the composition of Example 2 are changed to 70 mass%. Since Example 2 has better T50 and C500 values than Comparative Example 6, this shows that it is preferable that the mass ratio in the lower layer is 70 mass% or less and that the mass ratio in the upper layer is larger than the mass ratio in the lower layer.

Second, in Comparative Example 7, contrary to Example 2, the mass ratio in the upper layer is 67 mass% and the mass ratio in the lower layer is 80 mass%. As a result, Comparative Example 7 is further deteriorated in T50 and C500 as compared with Comparative Example 6. The reason is believed to be that the upper layer was deteriorated in thermal resistance because of reduction in ZrO₂ amount in the mixed oxide while the lower layer was deteriorated in oxygen storage capacity because of reduction in CeO₂ amount in the mixed oxide and that both the deteriorations deteriorated the catalytic conversion performance of Pd carried on the support materials in the lower layer.

Third, in Comparative Example 8, the mass ratio in the lower layer in the composition of Example 2 is changed from 67 mass% to 72 mass%. As a result, Comparative Example 8 became better in T50 and C500 than Comparative Example 6 but worse in those than Example 2. The reason is believed to be that out of oxygen storage components in the lower layer, the Ce-Zr-Nd mixed oxide starting to act at relatively low temperature contained a small amount of CeO₂ to deteriorate the oxygen storage capacity of the mixed oxide, thereby deteriorating the catalytic conversion performance of Pd carried on the support materials.

In Example 4, the mass ratio in the upper layer in the composition of Example 2 is changed from 80 mass% to 72 mass%. As a result, in Example 4, the values of T50 and C500 became better than those of Comparative Example 6 and close to those of Example 2. The reason is believed to be that out of oxygen storage components in the lower layer, the Ce-Zr-Nd mixed oxide starting to act at relatively low temperature contained adequate amounts of ZrO₂ and CeO₂ to balance the thermal resistance with the oxygen storage capacity of the mixed oxide, thereby improving the catalytic conversion performance of Pd carried on the support materials as compared with Comparative Example 6. Likewise in the upper layer, it is believed that the Ce-Zr-Nd mixed oxide contained adequate amounts of ZrO₂ and CeO₂ to balance the thermal resistance with the oxygen storage capacity of the mixed oxide, thereby improving the catalytic conversion performance of Rh carried on the support materials as compared with Comparative Examples 6 to 8.

The above results can be summarized as follows. In Examples 2 and 4, the lower layer, which does not face the exhaust gas channel and is not so much thermally severe as the upper layer, contains the Ce-Zr-Nd mixed oxide having a mass ratio of 70 mass% or less, while the upper layer exposed to high-temperature exhaust gas contains the Ce-Zr-Nd mixed oxide having a larger mass ratio than the Ce-Zr-Nd mixed oxide in the lower layer. Therefore, the catalytic conversion performances of catalytic precious metals Pd and Rh are improved while the thermal resistance of the upper layer and the oxygen storage capacity of the lower layer are both improved, which enables the catalyst to maintain high catalytic conversion performance over a long period of time.

In view of balance between thermal resistance and oxygen storage capacity, it is believed that the mass ratio in the lower layer should be at least about 50 mass%.

### <Effects of Pd in the lower layer being carried distributively on plural support materials >

Effects of Pd in the lower layer being carried distributively on the first alumina and the Ce-Zr-La-Y-alumina compound in Example 2 will be described in comparison with Comparative Example 9 in which Pd in the lower layer is carried only on the first alumina.

Figure **15** shows that Example 2 has better T50 values for HC and CO than Comparative Example 9. The reason is believed to be that since in Example 2 Pd is distributively carried on the first alumina and the Ce-Zr-La-Y-alumina compound, the number of active sites of Pd was increased to provide high activity particularly for conversion of HC and CO. Further, Pd is controlled into a good oxidation condition by active oxygen supplied from the Ce-Zr-La-Y-alumina compound which is an oxygen storage component, so that the efficiencies of oxidation conversion of HC and CO can be enhanced over a long period of time.

Figure **19** schematically shows the structure of a catalytic coating of a three-way catalyst according to an example which is no embodiment of the invention. This three-way catalyst also has a structure in which two catalytic layers, upper and lower, are formed on the wall of each of exhaust gas channels in a honeycomb support shown in Figures **2** and **3** but is characterized by containing no Pt.

The lower catalytic layer contains a Pd-carried alumina, a Pd-carried Ce-Zr-La-Y-alumina compound, a Ce-Zr-Nd mixed oxide, cerium dioxide (CeO₂) and a binder (zirconium dioxide (ZrO₂)). The upper catalytic layer contains a Rh-carried Ce-Zr-Nd mixed oxide, a Rh-carried and ZrO₂-coated alumina (called a third alumina in Embodiment 1) and a binder (zirconium dioxide (ZrO₂)). The alumina, ZrO₂-coated alumina, Ce-Zr-Nd mixed oxide, Ce-Zr-La-Y-alumina compound and cerium dioxide are formed in particles like the preceding embodiment.

### [Preparation of Three-way catalyst]

The preparation of the three-way catalyst is generally carried out in the following manner.

### <Formation of lower catalytic layer>

4-mass% La containing, Pd-carried active alumina is prepared according to the method as described in the preceding embodiment. Powder of the Pd-carried active alumina, powder of Pd-carried Ce-Zr-La-Y-alumina compound, powder of Ce-Zr-Nd mixed oxide, powder of CeO₂ and a binder are mixed, water is also added and the resultant mixture is further mixed by stirring with a disperser to obtain a slurry. A honeycomb support made of cordierite is immersed in the slurry and then picked up and surplus slurry is removed by air blow. This process is repeated until the support is coated with a predetermined amount of slurry. Thereafter, the honeycomb support is heated from normal temperature up to 500°C at a constant rate of temperature increase in 1.5 hours. The honeycomb support is dried and calcined by keeping it at 500°C for two hours, resulting in the formation of a lower catalytic layer.

### <Formation of upper catalytic layer>

Rh-carried Ce-Zr-Nd mixed oxide is prepared according to the method as described in the preceding embodiment. Powder of the Rh-carried Ce-Zr-Nd mixed oxide, powder of Rh-carried and ZrO₂-coated alumina and a binder are mixed, water is also added and the resultant mixture is further mixed by stirring with a disperser to obtain a slurry. The cordierite honeycomb support having the lower catalytic layer formed as above is immersed in the slurry and then picked up and surplus slurry is removed by air blow. This process is repeated until the support is coated with a predetermined amount of slurry. Thereafter, the honeycomb support is heated from normal temperature up to 500°C at a constant rate of temperature increase in 1.5 hours. The honeycomb support is dried and calcined by keeping it at 500°C for two hours, resulting in the formation of an upper catalytic layer.

### [Examples]

### <Example 5>

A three-way catalyst having the following composition was produced according to the above-mentioned preparation method. The mass ratio of the total amount of Pd carried in the lower catalytic layer to the total amount of Rh carried in the upper catalytic layer is Pd/Rh = 4/1.

### - Lower catalytic layer -

Ce-Zr-Nd mixed oxide : carried amount of 5.7 g/L
Pd/first alumina : carried amount of 50.0 g/L (Pd : carried amount of 0.75 g/L)
Pd/Ce-Zr-La-Y-alumina compound : carried amount of 25.0 g/L (Pd : carried amount of 0.37 g/L)
cerium dioxide : carried amount of 5.7 g/L
zirconia binder : carried amount of 8.5 g/L

### - Upper catalytic layer -

Rh/Ce-Zr-Nd mixed oxide : carried amount of 56.0 g/L (Rh : carried amount of 0.20 g/L)
Rh/ZrO₂-coated alumina : carried amount of 42.5 g/L (Rh : carried amount of 0.08 g/L)
zirconia binder : carried amount of 11.0 g/L

### <Example 6>

A three-way catalyst having the following composition was produced according to the above-mentioned preparation method. The mass ratio of the total amount of Pd carried in the lower catalytic layer to the total amount of Rh carried in the upper catalytic layer is Pd/Rh = 5/1.

### - Lower catalytic layer -

Ce-Zr-Nd mixed oxide : carried amount of 5.7 g/L
Pd/first alumina : carried amount of 50.0 g/L (Pd : carried amount of 0.78 g/L)
Pd/Ce-Zr-La-Y-alumina compound : carried amount of 25.0 g/L (Pd : carried amount of 0.39 g/L)
cerium dioxide : carried amount of 5.7 g/L
zirconia binder : carried amount of 8.5 g/L

### - Upper catalytic layer -

Rh/Ce-Zr-Nd mixed oxide : carried amount of 56.0 g/L (Rh : carried amount of 0.17 g/L)
Rh/ZrO₂-coated alumina : carried amount of 42.5 g/L (Rh : carried amount of 0.07 g/L)
zirconia binder : carried amount of 11.0 g/L

### <Example 7>

A three-way catalyst having the following composition was produced according to the above-mentioned preparation method. The mass ratio of the total amount of Pd carried in the lower catalytic layer to the total amount of Rh carried in the upper catalytic layer is Pd/Rh = 7/1.

### - Lower catalytic layer -

Ce-Zr-Nd mixed oxide : carried amount of 5.7 g/L
Pd/first alumina : carried amount of 50.0 g/L (Pd : carried amount of 0.82 g/L)
Pd/Ce-Zr-La-Y-alumina compound : carried amount of 25.0 g/L (Pd : carried amount of 0.40 g/L)
cerium dioxide : carried amount of 5.7 g/L
zirconia binder : carried amount of 8.5 g/L

### - Upper catalytic layer -

Rh/Ce-Zr-Nd mixed oxide : carried amount of 56.0 g/L (Rh : carried amount of 0.13 g/L)
g/L) Rh/ZrO₂-coated alumina : carried amount of 42.5 g/L (Rh : carried amount of 0.05
zirconia binder : carried amount of 11.0 g/L

### <Example 8>

A three-way catalyst having the following composition was produced according to the above-mentioned preparation method. The mass ratio of the total amount of Pd carried in the lower catalytic layer to the total amount of Rh carried in the upper catalytic layer is Pd/Rh = 3/1.

### - Lower catalytic layer -

Ce-Zr-Nd mixed oxide : carried amount of 5.7 g/L
Pd/first alumina : carried amount of 50.0 g/L (Pd : carried amount of 0.70 g/L)
Pd/Ce-Zr-La-Y-alumina compound : carried amount of 25.0 g/L (Pd : carried amount of 0.35 g/L)
cerium dioxide : carried amount of 5.7 g/L
zirconia binder : carried amount of 8.5 g/L

### - Upper catalytic layer -

Rh/Ce-Zr-Nd mixed oxide : carried amount of 56.0 g/L (Rh : carried amount of 0.25 g/L)
Rh/ZrO₂-coated alumina : carried amount of 42.5 g/L (Rh : carried amount of 0.10 g/L)
zirconia binder : carried amount of 11.0 g/L

### <Example 9>

A three-way catalyst having the following composition was produced according to the above-mentioned preparation method. The mass ratio of the total amount of Pd carried in the lower catalytic layer to the total amount of Rh carried in the upper catalytic layer is Pd/Rh = 10/1.

### - Lower catalytic layer -

Ce-Zr-Nd mixed oxide : carried amount of 5.7 g/L
Pd/first alumina : carried amount of 50.0 g/L (Pd : carried amount of 0.85 g/L)
Pd/Ce-Zr-La-Y-alumina compound : carried amount of 25.0 g/L (Pd : carried amount of 0.42 g/L)
cerium dioxide : carried amount of 5.7 g/L
zirconia binder : carried amount of 8.5 g/L

### - Upper catalytic layer -

Rh/Ce-Zr-Nd mixed oxide : carried amount of 56.0 g/L (Rh : carried amount of 0.09 g/L)
Rh/ZrO₂-coated alumina : carried amount of 42.5 g/L (Rh : carried amount of 0.04 g/L)
zirconia binder : carried amount of 11.0 g/L

### <Evaluation tests>

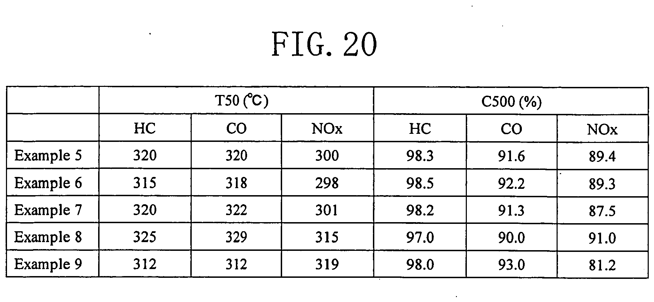

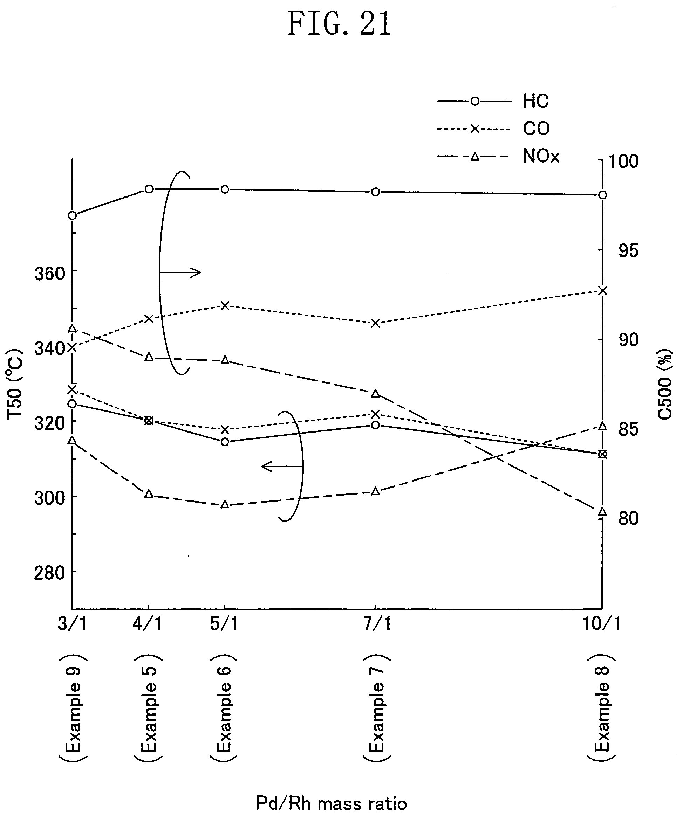

The catalyst in each of Examples 5 to 9 was aged by keeping it at 1000°C in an atmosphere of 2% of O₂ and 10% of H₂O for 24 hours and then measured in terms of T50 (°C) and C500 (%), which are indices for conversion performance of HC, CO and NOx, by a rig test. The evaluation tests were implemented under the same conditions and by the same method as in the preceding embodiment. The test results are shown in Figures **20** and **21****.**

Example 6 has a mass ratio of Pd/Rh = 5/1 which corresponds to Example 2 in which Pt-carried alumina is contained in the upper catalytic layer (i.e., Pd/(Rh+Pt) = approximately 5/1). Comparison of both examples shows that Example 6 containing no Pt-carried alumina in the upper catalytic layer is lower in T50 for all of HC, CO and NOx and higher in C500 for all of HC, CO and NOx than Example 2.

Consideration is made of influences of a difference in Pd/Rh mass ratio on T50 and C500. Figure **21** shows that when the Pd/Rh mass ratio is in the range from 4/1 to 7/1, relatively good results are obtained in terms of T50. On the other hand, Example 9 in which the Pd/Rh mass ratio is 3/1 has high T50 values for HC, CO and NOx. Example 8 in which the Pd/Rh mass ratio is 10/1 has low T50 values for HC and CO but a high T50 value for NOx. It is believed that in Example 8 a small amount of Pd weakens the function of an oxidation catalyst and that in Example 9 a large amount of Pd acts adversely on NOx reduction conversion while lowering T50 for HC and CO. In terms of C500, relatively good results are obtained for HC and CO when the Pd/Rh mass ratio is 4/1 or more. On the other hand, the value of C500 becomes worse for NOx as the Pd/Rh mass ratio increases.

It can be said from the above results that a preferable range of the Pd/Rh mass ratio is from 4/1 to 7/1 both inclusive.

### <Influences of the existence/absence of Pt-carried alumina on catalytic activity>

As described above, Example 6 containing no Pt-carried alumina in the upper catalytic layer has a higher catalytic activity than Example 2 containing Pt-carried alumina. Further consideration will be given to this aspect below.

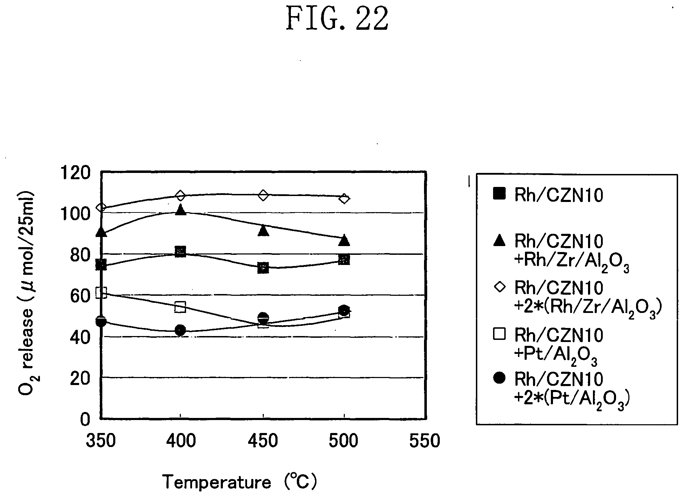

Figure **22** shows results of measurement of oxygen release amount in each of a catalyst containing the Rh/Ce-Zr-Nd mixed oxide (abbreviated to Rh/CZN10) alone in the upper layer, a catalyst containing Rh/CZN10 and Rh/ZrO₂-coated alumina (abbreviated to Rh/Zr/Al₂O₃) in the upper layer and a catalyst containing Rh/CZN10 and Pt-carried alumina (abbreviated to Pt/Al₂O₃). In the key of Figure **22****,** "+" indicates mixing that material and "2*" indicates mixing double quantity of that material.

The measurement of oxygen release amount was implemented using the test device shown in Figure **17****.** First, gas containing 10% of CO₂ and 90%t of N₂ was allowed to flow through a test piece **12** increased up to a predetermined temperature. Then, oxygen was added to the gas for 20 seconds (lean conditions), no gas was then added for 20 seconds (stoichiometric conditions), CO was then added for 20 seconds (rich conditions) and no gas was then added for 20 seconds (stoichiometric conditions). While this cycle was repeated, the output difference between the linear oxygen sensor at the catalyst entrance and the linear oxygen sensor at the catalyst exit, i.e., (the output at the catalyst entrance)-(the output at the catalyst exit), was measured. Under rich conditions, the test piece releases oxygen so that the output difference assume a negative value. The oxygen release amount in each catalyst was obtained by summating the output differences under rich conditions in certain cycles.

As seen from Figure **22****,** when Rh/CZN10 is mixed with Pt/Al₂O₃, the oxygen release amount becomes smaller than when the upper layer contains Rh/CZN10 alone. On the other hand, when Rh/CZN10 is mixed with Rh/Zr/Al₂O₃, the oxygen release amount becomes larger than when the upper layer contains Rh/CZN10 alone. This means that Pt/Al₂O₃ is a factor restricting the oxygen storage/release capacity of Rh/CZN10 and Rh/Zr/Al₂O₃ is a factor promoting the oxygen storage/release capacity of Rh/CZNIO. In other words, the reason why Example 6 has a higher catalytic activity than Example 2 is that the upper layer in Example 6 contains no Pt/Al₂O₃ that restricts the oxygen storage/release capacity of Rh/CZN10.

In this connection, influences of each of Rh/Zr/Al₂O₃ and Pt/Al₂O₃ on the oxygen storage/release capacity of Rh/CZN10 will be considered.

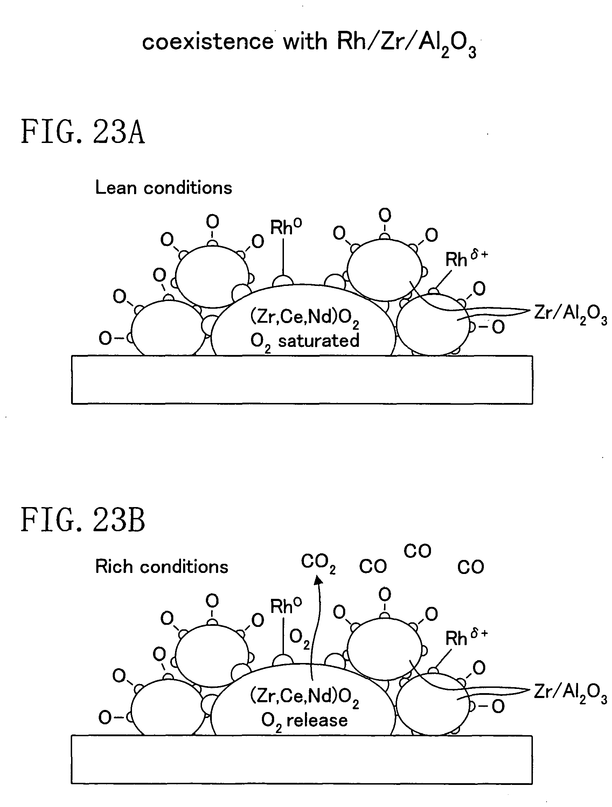

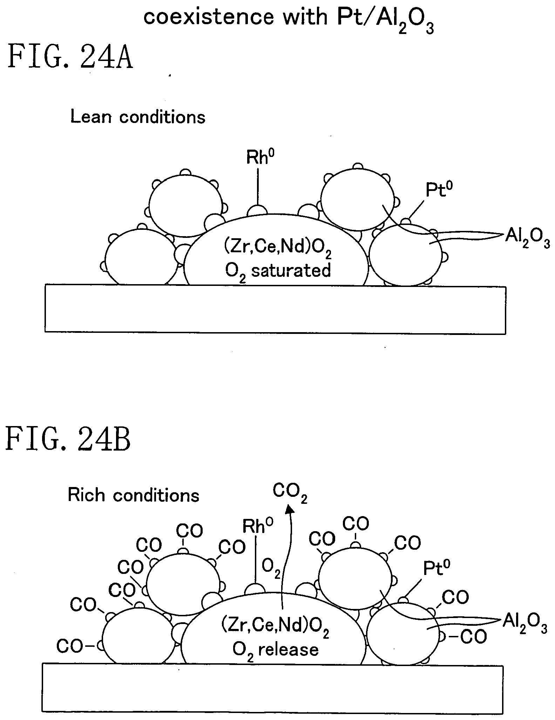

Figures **23A** and **24A** schematically show the surface state of the catalytic coating under lean exhaust gas conditions when Rh/CZN10 coexists with Rh/Zr/Al₂O₃ and the surface state of the catalytic coating under lean exhaust gas conditions when Rh/CZN10 coexists with Pt/Al₂O₃, respectively. Since Rh in Rh/Zr/Al₂O₃ is oxidized under lean exhaust gas conditions, an active oxygen atom exists on the surface of Rh. On the other hand, Pt in Pt/Al₂O₃ is metalized (becomes a simple substance).

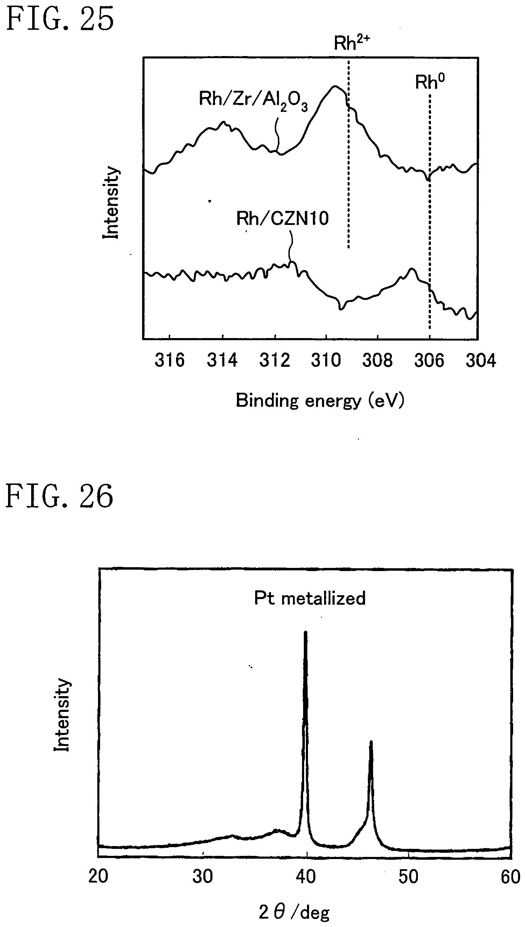

The above fact is supported by data in Figures **25** and **26.** Figure **25** shows results of examination of Rh 3d electron binding energy of Rh/CZN10 and Rh/Zr/Al₂O₃ after each of them is kept at 1100°C in an atmosphere of 2% of O₂ and 10% of H₂O for 24 hours. As seen from Figure **25****,** Rh/Zr/Al₂O₃ causes absorption at 309.5eV and Rh is oxidized at the point. Figure **26** shows results of X-ray diffraction of Pt/Al₂O₃ after kept at 800°C in the normal atmosphere for 24 hours. As seen from Figure **26****,** diffraction occurs at 2θ/θ = 39.5° and Pt is metalized at the point.

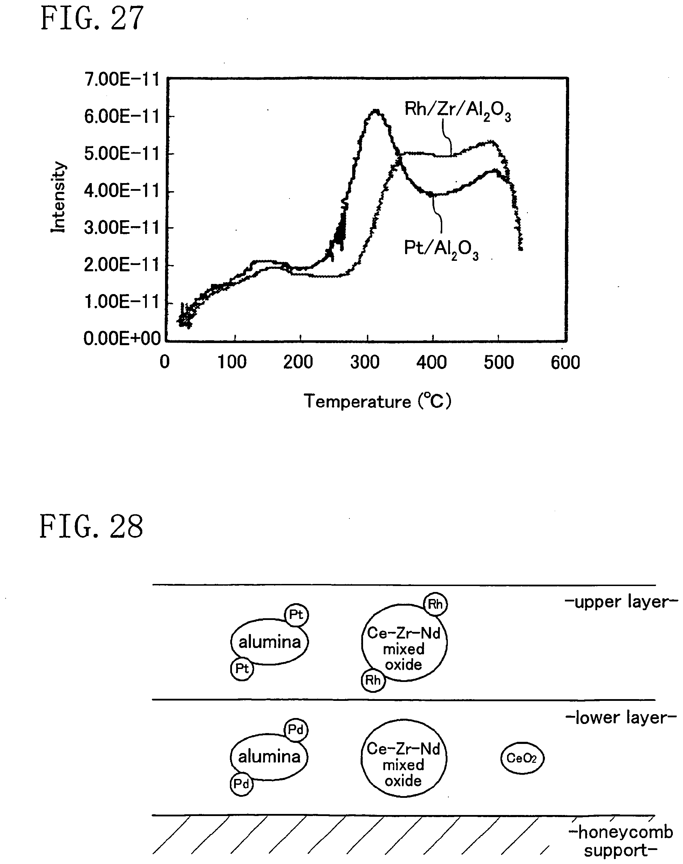

When Rh/Zr/Al₂O₃ and Pt/Al₂O₃ are examined for CO oxidation capacity, Rh/Zr/Al₂O₃ has a higher CO oxidation capacity than Pt/Al₂O₃ in the range from slightly over 300°C, at which oxygen release from Rh/CZN10 becomes active, to 500°C as shown in Figure **27****.**

Therefore, behaviors of catalytic components when the exhaust gas conditions are changed from lean to rich in each of the catalyst in which Rh/CZN10 coexists with Rh/Zr/Al₂O₃ and the catalyst in which Rh/CZN10 coexists with Pt/Al₂O₃ are believed to be as follows.

In the case where Rh/CZN10 coexists with Rh/Zr/Al₂O₃, under rich conditions, CO ions are attracted to active oxygen atoms on the surfaces of Rh particles as shown in Figure **23B****.** Then, the reaction of CO+O→CO₂ occurs at each Rh particle so that the oxygen atom on the Rh particle is removed. Since, however, Rh in Rh/Zr/Al₂O₃ is likely to be oxidized as is obvious from data in Figure 25, it has a strong tendency to take oxygen atom from its ambient atmosphere. Therefore, oxygen is supplied to Rh in Rh/Zr/Al₂O₃ from Rh/CZN10 absorbing oxygen in the vicinity of Rh/Zr/Al₂O₃. When the temperature at which oxygen is released from Rh/CZN10 is reached, the CO oxidation capacity of Rh in Rh/Zr/Al₂O₃ is particularly enhanced, which promotes the reaction of CO+O→CO₂. Therefore, when Rh/CZN10 coexists with Rh/Zr/Al₂O₃, oxygen release is promoted.

On the other hand, in the case where Rh/CZN10 coexists with Pt/Al₂O₃, almost all of Pt particles exist in metal form. Therefore, even under rich conditions, CO in the ambient atmosphere is merely adsorbed to Pt as shown in Figure 24B. Since Pt does not bind to any oxygen atom, it is less likely to cause the reaction of CO+O→CO₂. As shown in Figure 27, Pt in Pt/Al₂O₃ has a high CO oxidation capacity in the range from 200°C to slightly over 300°C. In this temperature range, however, Rh/CZN10 cannot release oxygen so much. Therefore, the high CO oxidation capacity in that temperature range is not a substantial factor promoting oxygen release from Rh/CZNIO. By contrast, at higher temperatures than slightly over 300°C at which oxygen release from Rh/CZN10 should become active, Pt deteriorates its CO oxidation capacity to adsorb CO, which restricts oxygen release from Rh/CZN10. In other words, even if Rh/CZN10 releases oxygen atoms, the released oxygen atoms are not used so much for oxidation of CO. Therefore, the oxygen concentration around Rh/CZN10 becomes high so that Rh/CZN10 is less likely to release oxygen.

From the above, it can be believed that Example 6, in which the oxygen storage component Rh/CZN10 coexists with not Pt/Al₂O₃ but Rh/Zr/Al₂O₃, is enhanced in activity because of promoted oxygen release from Rh/CZNIO as compared with Example 2 in which Rh/CZN10 coexists with Pt/Al₂O₃.

## Claims

1. An exhaust gas purification catalyst in which a catalytic coating containing plural kinds of catalytic precious metals and plural kinds of particulate aluminas is coated on a honeycomb support, wherein
the plural kinds of particulate aluminas include at least one kind of particulate alumina with relatively large specific surface area, at least one kind of particulate alumina with relatively small specific surface area and at least one kind of particulate alumina compounded with at least cerium to have oxygen storage capacity,
the catalytic coating is formed of an upper layer and a lower layer, the lower layer containing the at least one kind of particulate alumina with relatively large specific surface area and the at least one kind of particulate alumina having oxygen storage capacity, the upper layer containing the at least one kind of particulate alumina with relatively small specific surface area,
out of the plural kinds of catalystic precious metals, palladium is carried on the at least one kind of particulate alumina with relatively large specific surface area and the at least one kind of particulate alumina having oxygen storage capacity and platinum and rhodium are carried on separate particles of the at least one kind of particulate alumina with relatively small specific surface area, and
the particles of the particulate alumina carrying the rhodium are coated with zirconium dioxide.

## Patentansprüche

1. Abgasreinigungskatalysator, bei dem eine katalytische Beschichtung, die mehrere Arten von katalytischen Edelmetallen und mehrere Arten von partikelförmigen Aluminiumoxiden enthält, auf einen Wabenstrukturträger geschichtet ist, wobei
die mehreren Arten von partikelförmigen Aluminiumoxiden zumindest eine Art von partikelförmigem Aluminiumoxid mit einer relativ großen spezifischen Oberfläche, zumindest eine Art von partikelförmigem Aluminiumoxid mit einer relativ kleinen spezifischen Oberfläche und zumindest eine Art von partikelförmigem Aluminiumoxid umfasst, das zumindest mit Cerium kompoundiert ist, um eine Sauerstoffspeicherungskapazität zu haben,
die katalytische Beschichtung aus einer oberen Schicht und einer unteren Schicht gebildet ist, wobei die untere Schicht die zumindest eine Art von partikelförmigem Aluminiumoxid mit relativ großer spezifischer Oberfläche und die zumindest eine Art von partikelförmigen Aluminiumoxid mit Sauerstoffspeicherungskapazität enthält, wobei die obere Schicht die zumindest eine Art von partikelförmigen Aluminiumoxid mit relativ kleiner spezifischer Oberfläche enthält,
unter den mehreren Arten von katalytischen Edelmetallen Palladium auf der zumindest einen Art von partikelförmigen Aluminiumoxid mit relativ großer spezifischer Oberfläche und der zumindest einen Art von partikelförmigem Aluminiumoxid mit Sauerstoffspeicherkapazität getragen wird, und Platin und Rhodium auf getrennten Teilchen der zumindest einen Art von partikelförmigen Aluminiumoxid mit relativ kleiner spezifischer Oberfläche getragen werden, und
die Teilchen des partikelförmigen Aluminiumoxids, die das Rhodium tragen, mit Zirconiumdioxid beschichtet sind.

## Revendications

1. Catalyseur de purification de gaz d'échappement, dans lequel un revêtement catalytique contenant plusieurs types de métaux précieux catalytiques et plusieurs types d'alumines particulaires est appliqué sur un support en nid d'abeilles, dans lequel
les plusieurs types d'alumines particulaires incluent au moins un type d'alumine particulaire présentant une surface spécifique relativement grande, au moins un type d'alumine particulaire présentant une surface spécifique relativement petite, et au moins un type d'alumine particulaire en composition avec au moins du cérium pour disposer d'une capacité de stockage d'oxygène ;
le revêtement catalytique est formé d'une couche supérieure et d'une couche inférieure, la couche inférieure contenant le au moins un type d'alumine particulaire présentant une surface spécifique relativement grande et le au moins un type d'alumine particulaire présentant une capacité de stockage d'oxygène, la couche supérieure contenant le au moins un type d'alumine particulaire présentant une surface spécifique relativement petite ;
parmi les plusieurs types de métaux précieux catalytiques, le palladium est porté sur le au moins un type d'alumine particulaire présentant une surface spécifique relativement grande et le au moins un type d'alumine particulaire présentant une capacité de stockage d'oxygène, et du platine et du rhodium sont portés sur des particules séparées du au moins un type d'alumine particulaire présentant une surface spécifique relativement petite, et
les particules de l'alumine particulaire portant le rhodium sont revêtues de dioxyde de zirconium.
